# EUROPEAN PATENT SPECIFICATION

(11) **EP 3 569 667 B1**
(45) Date of publication and mention of the grant of the patent: **27.07.2022**
(21) Application number: 17891736.5
(22) Date of filing: 20.12.2017
(51) Int. Cl.: C09D 11/38, C09D 11/326, C09D 11/322, B41M 5/00, B41J 2/01, B41M 7/00

(54) **INKJET INK COMPOSITION AND IMAGE FORMATION METHOD**
TINTENSTRAHLTINTENZUSAMMENSETZUNG UND BILDERZEUGUNGSVERFAHREN
COMPOSITION D'ENCRE POUR JET D'ENCRE, ET PROCÉDÉ DE FORMATION D'IMAGE

(30) Priority: 12.01.2017 JP 2017003314
(43) Date of publication of application: 20.11.2019
(73) Proprietor: Konica Minolta, Inc., Tokyo 100-7015 (JP)
(72) Inventor: YAMAGUCHI, Go, Tokyo 100-7015 (JP); TOEDA, Takayuki, Tokyo 100-7015 (JP)
(74) Representative: Henkel & Partner mbB
(86) International application number: PCT/JP2017/045620
(87) International publication number: WO 2018/131400

(56) References cited:
- EP-A1- 3 473 683
- WO-A1-2017/217187
- JP-A- 2004 285 216
- JP-A- 2009 197 173
- JP-A- 2012 207 199
- JP-A- 2014 071 354
- US-A1- 2006 128 823
- US-A1- 2012 225 968

## Description

### Technical Field

The present invention relates to an inkjet ink composition and an image forming method.

### Background Art

Inkjet image forming methods, which allow image formation in a simple and inexpensive manner, are used in various fields of printing. Ink containing a photocurable compound, which cures on being irradiated with actinic radiation (hereinafter, also referred to as "actinic radiation-curable ink", simply), is known as one of inkjet inks. The actinic radiation-curable ink allows formation of an image having high adhesion even on a recording medium having low water absorbability, and hence has been attracting attention in recent years.

In inkjet image forming methods, an appropriate combination of inks for a color to be formed is selected from yellow ink, magenta ink, cyan ink, and black ink, and the inks selected are overprinted to form a full-color image. So as to cover the color gamut shown in a color sample book of Pantone (R), a method for extending the color gamut has been conducted by additionally using violet ink, orange ink, and green ink as spot colors (PTL 1).

Organic pigments used for spot colors (for example, violet, orange, green, and blue organic pigments) are known to generally have an inert surface and low dispersibility. Thus, such organic pigments do not allow successful adsorption on the surface only by using a conventional polymer dispersant, and hence maintenance of the dispersibility of such a pigment in ink is difficult. Known as a method for solving the problem is, for example, a method of adding a pigment in combination with a pigment derivative as a dispersion synergist to ink to improve the dispersion stability of the pigment (PTL 2).

### Citation List

### Patent Literatures

PTL 1: Japanese Patent Application Laid-Open No. 2010-13574
PTL 2: Japanese Patent Application Laid-Open No. 2005-173459

### Summary of Invention

### Technical Problem

The pigment derivative as described in PTL 2 has insufficient effect as a dispersion synergist, and suffers from difficulty in dispersing a pigment in ink to stably maintain the dispersion state. As a result, a satellite (a phenomenon that ink discharged from a nozzle of an inkjet head is not rounded but leaves a tail) or a mist (a phenomenon that the tail of a satellite breaks off and is scattered) associated with the increase of the viscosity of ink is generated, and image unevenness due to the satellite or mist is likely to occur. In addition, pigment aggregation may be generated during storage of ink to cause discharge failure.

In view of the above problems, an object of the present invention is to provide an inkjet ink composition containing a violet, orange, green, or blue organic pigment with the dispersion stability of the organic pigment further enhanced, and an image forming method using such an inkjet ink composition.

### Solution to Problem

A first aspect of the present invention provides the following inkjet ink composition.
[1] An inkjet ink composition, comprising: an organic pigment, a polymer dispersant, a benzoxazole derivative, a photocurable compound, and a photopolymerization initiator, wherein
   the organic pigment is: at least one violet pigment selected from the group consisting of C.I. Pigment Violet 23, C.I. Pigment Violet 32, C.I. Pigment Violet 37, and C.I. Pigment Violet 39; at least one orange pigment selected from the group consisting of C.I. Pigment Orange 36, C.I. Pigment Orange 38, C.I. Pigment Orange 43, C.I. Pigment Orange 64, and C.I. Pigment Orange 71; at least one green pigment selected from the group consisting of C.I. Pigment Green 7 and C.I. Pigment Green 36; or at least one blue pigment selected from the group consisting of C.I. Pigment Blue 15:6, C.I. Pigment Blue 25, and C.I. Pigment Blue 60, and
   the benzoxazole derivative is a compound represented by general formula (1): 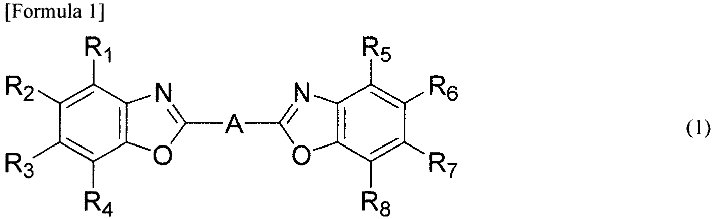 wherein
      R₁ to R₈ are each independently a hydrogen atom or an alkyl group and R₁ to R₈ optionally form a ring, and
      A is a linking group represented by any one of formulas (2) to (5): 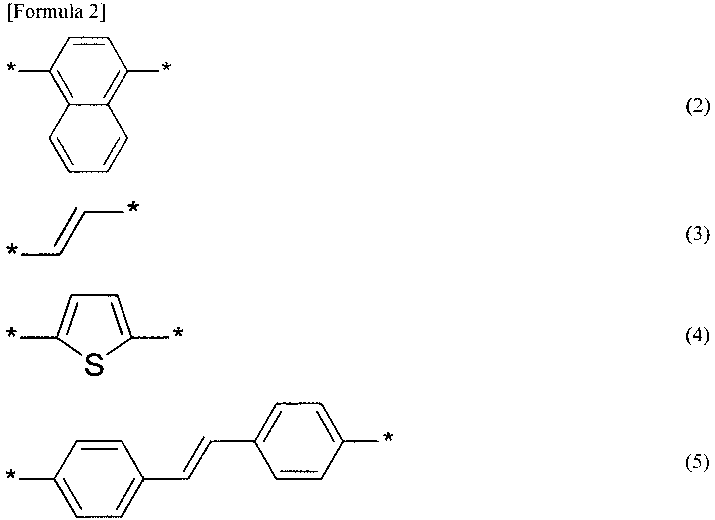
      wherein ^{∗} in formulas (2) to (5) represents a linking position of A in each formula.
[2] The inkjet ink composition according to [1], wherein the benzoxazole derivative is 1,4-bis(2-benzoxazolyl)naphthalene, 2,5-bis(5-tert-butyl-2-benzoxazolyl)thiophene, or 4,4'-bis(2-benzoxazolyl)-stilbene.
[3] The inkjet ink composition according to [1] or [2], wherein the polymer dispersant comprises a comb block copolymer.
[4] The inkjet ink composition according to any one of [1] to [3], wherein the photocurable compound comprises at least one member selected from the group consisting of an ethylene oxide-modified polymerizable compound and a propylene oxide-modified polymerizable compound.
[5] The inkjet ink composition according to any one of [1] to [4], further comprising a gelling agent.
   A second aspect of the present invention provides the following image forming method.
[6] An image forming method, comprising:
   discharging the inkjet ink composition according to any one of [1] to [5] from a nozzle of an inkjet recording head to attach the inkjet ink composition onto a substrate; and
   irradiating the inkjet ink composition attached onto the substrate with actinic radiation to cure the inkjet ink composition.

### Advantageous Effects of Invention

The present invention provides an inkjet ink composition containing a violet, orange, green, or blue organic pigment with the dispersion stability of the organic pigment further enhanced, and an image forming method using such an inkjet ink composition.

### Description of Embodiments

The present inventors diligently studied to develop an inkjet ink composition using an organic pigment having hydrophobic structure with extremely low dispersibility to form finer images with less image unevenness and fewer white streaks due to dot defects, and eventually found that when an inkjet ink composition with a specific organic pigment having low dispersibility in the inkjet ink composition is prepared by using a polymer dispersant in combination with a benzoxazole derivative, the dispersibility of the organic pigment is enhanced. This is probably because the benzoxazole derivative exhibits high affinity for both the hydrophobic site of the organic pigment and the hydrophobic site of the polymer dispersant. Accordingly, the benzoxazole derivative is considered to be effective for prevention of image unevenness and discharge failure associated with the increase of the viscosity of the inkjet ink composition through enhancing the dispersibility of the hydrophobic organic pigment to inhibit the aggregation of the organic pigment.

### 1. Inkjet ink composition

The inkjet ink composition according to the present invention is an inkjet ink composition (hereinafter, also referred to as "ink composition", occasionally) containing an organic pigment, a polymer dispersant, a benzoxazole derivative, a photocurable compound, and a photopolymerization initiator.

### 1-1. Organic pigment

The organic pigment contains a violet pigment, an orange pigment, a green pigment, or a blue pigment. The organic pigment contained in the inkjet ink composition may be only one organic pigment, or two or more pigments of the same color.

The violet pigment is at least one member selected from the group consisting of C.I. Pigment Violet 23, C.I. Pigment Violet 32, C.I. Pigment Violet 37, and C.I. Pigment Violet 39. C.I. Pigment Violet 23 and C.I. Pigment Violet 37 are preferred, and C.I. Pigment Violet 23 is more preferred as the violet pigment.

Examples of commercially available products of C.I. Pigment Violet 23 include: Fastogen Super Violet LBP02, Fastogen Super Violet LBP03, and Fastogen Super Violet LBP04 (all manufactured by DIC Corporation, "Fastogen" is a registered trademark of the company); Cromophtal Violet D5808 (manufactured by BASF SE, "Cromophtal" is a registered trademark of the company); and Hostaperm Violet RL-NF, Hostaperm Violet P-RL, and PV Fast Violet RL (manufactured by Clariant, "Hostaperm" is a registered trademark of the company).

Examples of commercially available products of C.I. Pigment Violet 37 include Cromophtal Violet D5808 (manufactured by BASF SE, "Cromophtal" is a registered trademark of the company).

Examples of commercially available products of C.I. Pigment Violet 39 include Fanal violet D6060 and Fanal violet D6070 (all manufactured by BASF SE, "Fanal" is a registered trademark of the company).

The orange pigment is at least one member selected from the group consisting of C.I. Pigment Orange 36, C.I. Pigment Orange 38, C.I. Pigment Orange 43, C.I. Pigment Orange 64, and C.I. Pigment Orange 71. C.I. Pigment Orange 43, C.I. Pigment Orange 64, and C.I. Pigment Orange 71 are preferred, and C.I. Pigment Orange 43 and C.I. Pigment Orange 71 are more preferred as the orange pigment.

Examples of commercially available products of C.I. Pigment Orange 36 include PV Fast Orange HL (manufactured by Clariant).

Examples of commercially available products of C.I. Pigment Orange 38 include NOVOPERM Red HFG (manufactured by Clariant, "Novoperm" is a registered trademark of the company).

Examples of commercially available products of C.I. Pigment Orange 43 include PV Fast Orange GRL (manufactured by Clariant).

Examples of commercially available products of C.I. Pigment Orange 64 include PV Fast Orange H2GL VP3044 (manufactured by Clariant).

Examples of commercially available products of C.I. Pigment Orange 71 include IRGAZIN ORANGE D2905 (manufactured by BASF SE, "IRGAZIN" is a registered trademark of the company).

The green pigment is at least one green pigment selected from the group consisting of C.I. Pigment Green 7 and C.I. Pigment Green 36. Pigment Green 7 is preferred as the green pigment.

Examples of commercially available products of C.I. Pigment Green 7 include FASTOGEN Green S (manufactured by DIC Corporation, "Fastogen" is a registered trademark of the company).

Examples of commercially available products of C.I. Pigment Green 36 include FASTOGEN Green 2YK (manufactured by DIC Corporation, "Fastogen" is a registered trademark of the company).

The blue pigment is at least one member selected from the group consisting of C.I. Pigment Blue 15:6, C.I. Pigment Blue 25, and C.I. Pigment Blue 60. C.I. Pigment Blue 15:6 and C.I. Pigment Blue 60 are preferred, and C.I. Pigment Blue 60 is more preferred as the blue pigment.

Examples of commercially available products of C.I. Pigment Blue 15:6 include LIONOL BLUE ES (manufactured by TOYOCOLOR CO., LTD.).

Examples of commercially available products of C.I. Pigment Blue 25 include Symuler Fast Blue 4198 (manufactured by DIC Corporation, "Symuler" is a registered trademark of the company).

Examples of commercially available products of C.I. Pigment Blue 60 include LIONOGEN BLUE 6510 (manufactured by TOYOCOLOR CO., LTD.).

The content of the pigment may be in any range that provides images to be obtained with sufficient color development and imparts viscosity that allows the inkjet ink composition to be discharged from an inkjet head. From the viewpoints, the content of the pigment is, for example, preferably 0.1mass% to 20mass%, and more preferably 0.4mass% to 10mass% to the inkjet ink composition.

### 1-2. Polymer dispersant

The polymer dispersant can function to enhance the dispersibility of the pigment by being directly adsorbed on the surface of the pigment or being indirectly adsorbed via the benzoxazole derivative described later. Examples of the polymer dispersant include hydroxy group-containing carboxylates, salts of long-chain polyaminoamide and high-molecular-weight acid ester, salts of high-molecular-weight polycarboxylic acid, salts of long-chain polyaminoamide and polar acid ester, high-molecular-weight unsaturated acid esters, high-molecular-weight copolymers, modified polyurethanes, modified polyacrylates, polyether ester anionic active agents, naphthalenesulfonic acid-formalin condensate salts, aromatic sulfonic acid-formalin condensate salts, polyoxyethylene alkyl phosphates, polyoxyethylene nonylphenyl ethers, and stearylamine acetate.

Especially, comb block copolymer is preferred, and comb block copolymer having a basic group is more preferred because of the high affinity for the organic pigment and the benzoxazole derivative.

The comb block copolymer is a copolymer including a linear polymer forming a main chain and another polymer formed through graft polymerization on a constituent unit derived from a monomer constituting the linear main chain. A long-chain polyoxyalkyl group (ethylene oxide (EO)-propylene oxide (PO) copolymer group) is a preferred side chain. Examples of the comb block copolymer include copolymers including a main chain of a polymer of acrylate and a side chain of a long-chain polyoxyalkyl group (ethylene oxide-propylene oxide copolymer group).

In the comb block copolymer having a basic group, the basic group is preferably a tertiary, secondary, or primary amine group.

The comb block copolymer having a basic group can prevent the aggregation of the organic pigment through steric hindrance due to the side chain formed through graft polymerization. The organic pigment exhibits strong interparticle interaction because of the primary particle size as small as 50 nm or smaller, and thus has a tendency to aggregate. Accordingly, the enhancement of dispersibility by the comb block copolymer is particularly significant for inkjet ink compositions containing an organic pigment having such a small particle size. The dispersibility of the organic pigment enhanced by the effect reduces the frequency of poor discharge due to aggregated pigment particles and that of clogging of a recording head for ink discharge.

Examples of commercially available products of the comb block copolymer having a basic group include DISPERBYK-161, 168, 2155, Jet9150, and Jet9151 manufactured by BYK Additives & Instruments; efkaPX4701 and FA4431 manufactured by BASF SE; PB-821, 822, and 824 manufactured by Ajinomoto Fine-Techno Co., Inc.; and Solsperse 24000GR, 32000, 35000, 39000, J-100, J-180, J-200, and X-300 manufactured by Lubrizol Corporation. "DISPERBYK" is a registered trademark of BYK Additives & Instruments, "efka" is a registered trademark of BASF SE, and "Solsperse" is a registered trademark of Lubrizol Corporation.

### 1-3. Benzoxazole derivative

In the present invention, the benzoxazole derivative is a compound represented by general formula (1): 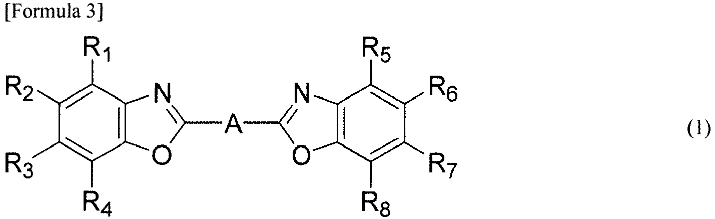 wherein
R₁ to R₈ are each independently a hydrogen atom or an alkyl group and R₁ to R₈ optionally form a ring, and
A is a linking group represented by any one of formulas (2) to (5): 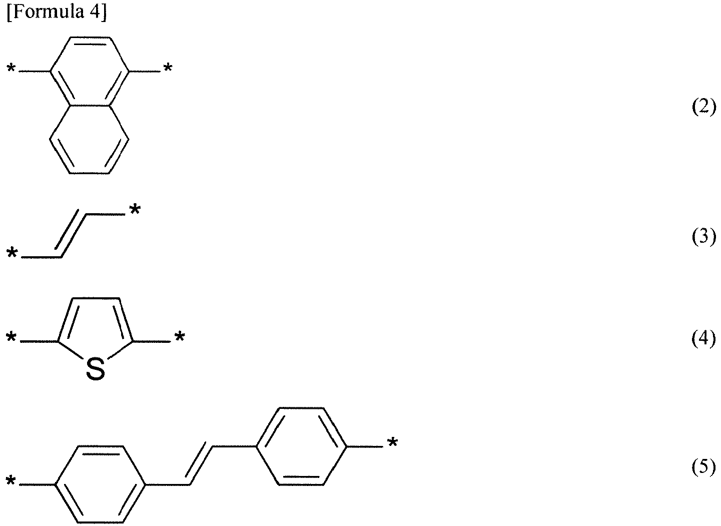 wherein ^{∗} in formulas (2) to (5) represents a linking position of A in each formula.

In general formula (1) above, R₁ to R₈ are each independently a hydrogen atom or an alkyl group. Examples of the alkyl group include C₁₋₁₀ alkyl groups, and the alkyl group may be linear, branched, or cyclic. The alkyl group may be substituted, and examples of the substituent include groups with a carbon atom such as a carboxyl group and an alkoxy group, a hydroxy group, and halogen atoms.

Examples of commercially available products of the benzoxazole-based compound represented by general formula (1) include FLUORESCENT BRIGHTENER KCB (manufactured by Hangzhou Xcolor pigment Imp. / Exp. Co., Ltd.), in which A in the general formula has the structure of formula (2), FLUORESCENT BRIGHTENER PF (manufactured by Hangzhou Xcolor pigment Imp. / Exp. Co., Ltd.), in which A in the general formula has the structure of formula (3), FLUORESCENT BRIGHTENER OB and FLUORESCENT BRIGHTENER PB (each manufactured by Hangzhou Xcolor pigment Imp. / Exp. Co., Ltd.), in which A in the general formula has the structure of formula (4), and FLUORESCENT BRIGHTENER OB-1 and FLUORESCENT BRIGHTENER KSN (each manufactured by Hangzhou Xcolor pigment Imp. / Exp. Co., Ltd.), in which A in the general formula has the structure of formula (5).

The benzoxazole derivative represented by general formula (1) is not particularly limited as long as it has high affinity for the organic pigment to be used in the present invention and also has high affinity for the polymer dispersant and enhances the dispersibility of the organic pigment in the inkjet ink composition. However, the following compounds are preferred because of particularly high affinity for the organic pigment to be used in the present invention.

1,4-Bis(2-benzoxazolyl)naphthalene (cas: 5089-22-5), in which A in general formula (1) has the structure of formula (2); 2,5-bis(5-tert-butyl-2-benzoxazolyl)thiophene (cas: 7128-64-5), in which A in general formula (1) has the structure of formula (4); and 4,4'-bis(2-benzoxazolyl)stilbene (cas: 1533-45-5), in which A in general formula (1) has the structure of formula (5). While 4,4'-bis(2-benzoxazolyl)stilbene is present as the cis-form or the trans-form, any of the isomers and a mixture of the isomers are applicable.

The content of the benzoxazole derivative is preferably 0.01mass% to 1.0mass%, more preferably 0.05mass% to 0.5mass%, and even more preferably 0.05mass% to 0.3mass%, to the total mass of the inkjet ink composition. To enhance the dispersibility of the pigment without causing coloring or light source-dependent discoloration due to the benzoxazole derivative, the amount of usage of the benzoxazole derivative preferably falls within the above range. Specifically, the organic pigment can be homogeneously dispersed in the inkjet ink composition if the content of the benzoxazole derivative is 0.01mass% or more, and there is no possibility of coloring and discoloration of the inkjet ink composition caused by the benzoxazole derivative if the content of the benzoxazole derivative is 1.0mass% or less.

### 1-4. Photocurable compound

The photocurable compound can polymerize to cure the inkjet ink composition on being irradiated with actinic radiation. Examples of the actinic radiation include ultraviolet rays, electron beams, α-rays, γ-rays, and X-rays. The actinic radiation is preferably an ultraviolet ray or an electron beam because of the safety and capability of polymerizing the photocurable compound even with a small amount of energy.

Photocurable compounds include radical polymerizable compounds and cationically polymerizable compounds. The photocurable compound is preferably a radical polymerizable compound because of the high tendency to cause polymerization and crosslinking and acceptance of selection from a wide variety of compounds in accordance with an image to be formed.

The radical polymerizable compound is a compound having a radical-polymerizable, ethylenically unsaturated bond. The radical polymerizable compound may be a monomer, a polymerizable oligomer, a prepolymer, or a mixture of any of them. The radical polymerizable compound contained in the inkjet ink composition may be only one radical polymerizable compound or two or more radical polymerizable compounds.

Examples of the compound having a radical-polymerizable, ethylenically unsaturated bond include unsaturated carboxylic acids and salts thereof, unsaturated carboxylate compounds, unsaturated carboxylic acid urethane compounds, unsaturated carboxylic acid amide compounds and anhydrides thereof, acrylonitrile, styrene, unsaturated polyesters, unsaturated polyethers, unsaturated polyamides, and unsaturated urethanes. Examples of unsaturated carboxylic acids include (meth)acrylic acid, itaconic acid, crotonic acid, isocrotonic acid, and maleic acid.

In particular, the radical polymerizable compound is preferably an unsaturated carboxylate compound, and more preferably (meth)acrylate. In the present invention, "(meth)acrylate" refers to acrylate or methacrylate, "(meth)acryloyl group" refers to an acryloyl group or a methacryloyl group, and "(meth)acryl" refers to acryl or methacryl.

"(Meth)acrylate" herein encompasses acrylate monomer and/or acrylate oligomer and methacrylate monomer and/or methacrylate oligomer.

Examples of (meth)acrylate include monofunctional monomers such as isoamyl (meth)acrylate, stearyl (meth)acrylate, lauryl (meth)acrylate, octyl (meth)acrylate, decyl (meth)acrylate, isomiristyl (meth)acrylate, isostearyl (meth)acrylate, 2-ethylhexyl-diglycol (meth)acrylate, 2-hydroxybutyl (meth)acrylate, 2-(meth)acryloyloxy-ethylhexahydrophthalic acid, butoxyethyl (meth)acrylate, ethoxydiethylene glycol (meth)acrylate, methoxydi-ethylene glycol(meth)acrylate, methoxypolyethylene glycol (meth)acrylate, methoxypropylene glycol (meth)acrylate, phenoxyethyl (meth)acrylate, tetrahydrofurfuryl (meth)acrylate, isobornyl (meth)acrylate, 2-hydroxyethyl (meth)acrylate, 2-hydroxypropyl (meth)acrylate, 2-hydroxy-3-phenoxypropyl (meth)acrylate, 2-(meth)acryloyloxyethylsuccinic acid, 2-(meth)acryloyloxyethylphthalic acid, 2-(meth)acryloyloxyethyl-2-hydroxyethyl-phthalic acid, and t-butylcyclohexyl (meth)acrylate; difunctional monomers such as triethylene glycol di(meth)acrylate, tetraethylene glycol di(meth)acrylate, polyethylene glycol di(meth)acrylate, tripropylene glycol di(meth)acrylate, polypropylene glycol di(meth)acrylate, 1,4-butanediol di(meth)acrylate, 1,6-hexanediol di(meth)acrylate, 1,9-nonanediol di(meth)acrylate, neopentyl glycol di(meth)acrylate, dimethylol-tricyclodecane di(meth)acrylate, bisphenol A PO-adduct di(meth)acrylate, neopentyl glycol hydroxypivalate di(meth)acrylate, polytetramethyleneglycol di(meth)acrylate, polyethylene glycol diacrylate, tripropylene glycol diacrylate, and tricyclodecanedimethanol diacrylate; and multifunctional monomers with tri- or higher functionality such as trimethylolpropane tri(meth)acrylate, pentaerythritol tri(meth)acrylate, pentaerythritol tetra(meth)acrylate, dipentaerythritol hexa(meth)acrylate, ditrimethylolpropane tetra(meth)acrylate, and glycerinpropoxy tri(meth)acrylate, and pentaerythritolethoxy tetra(meth)acrylate.

The photocurable compound is preferably a modified product. The (meth)acrylate compound as a modified product is particularly preferably a propylene oxide-modified (meth)acrylate compound or ethylene oxide-modified (meth)acrylate compound, which has been modified with propylene oxide or ethylene oxide. "Modified with propylene oxide or ethylene oxide" means that one or more repeating units consisting of propylene oxide or ethylene oxide have been introduced into a molecular chain. The number of repeating units consisting of propylene oxide or ethylene oxide included in the propylene oxide-modified (meth)acrylate compound or ethylene oxide-modified (meth)acrylate compound is preferably 1 to 14, and more preferably 3 to 14, per (meth)acrylate group.

Polymerizable compounds having an ethylene oxide group or propylene oxide group, which is hydrophilic, have high affinity for hydrophilic constituent units included in the polymer dispersant. Probably for this reason, the ethylene oxide-modified polymerizable compound or propylene oxide-modified polymerizable compound can enhance the dispersibility of the polymer dispersant.

Examples of the ethylene oxide-modified (meth)acrylate compound include polyethylene glycol di(meth)acrylate, ethylene oxide-modified trimethylolpropane tri(meth)acrylate, ethylene oxide-modified pentaerythritol tetra(meth)acrylate, and ethylene oxide-modified hexanediol diacrylate.

Examples of commercially available products of the ethylene oxide-modified (meth)acrylate compound include the 4EO-modified hexanediol diacrylate CD561 (molecular weight: 358), the 3EO-modified trimethylolpropane triacrylate SR454 (molecular weight: 429), the 6EO-modified trimethylolpropane triacrylate SR499 (molecular weight: 560), and the 4EO-modified pentaerythritol tetraacrylate SR494 (molecular weight: 529) manufactured by Sartomer; polyethylene glycol #400 diacrylate (NK Ester A-400 (molecular weight: 508)), polyethylene glycol #600 diacrylate (NK Ester A-600 (molecular weight: 742)), polyethylene glycol dimethacrylate (NK Ester 9G (molecular weight: 536)), and polyethylene glycol dimethacrylate (NK Ester 14G (molecular weight: 770)) manufactured by Shin-Nakamura Chemical Co., Ltd.; and tetraethylene glycol diacrylate (V#335HP (molecular weight: 302)) manufactured by OSAKA ORGANIC CHEMICAL INDUSTRY LTD.

Examples of the propylene oxide-modified (meth)acrylate compound include polypropylene glycol di(meth)acrylate, propylene oxide-modified neopentyl glycol di(meth)acrylate, bisphenol A propylene oxide adduct di(meth)acrylate, and glycerinpropoxy tri(meth)acrylate.

Examples of commercially available products of the propylene oxide-modified (meth)acrylate compound include 3PO-modified trimethylolpropane triacrylate (Photomer 4072 (molecular weight: 471)) manufactured by Cognis; dipropylene glycol diacrylate (NK Ester APG-100 (molecular weight: 242)), tripropylene glycol diacrylate (NK Ester APG-200 (molecular weight: 300)), polypropylene glycol #400 diacrylate (NK Ester APG-400 (molecular weight: 533)), and polypropylene glycol #700 diacrylate (NK Ester APG-700 (molecular weight: 823)) manufactured by Shin-Nakamura Chemical Co., Ltd.; and the 6PO-modified trimethylolpropane triacrylate CD501 (molecular weight: 645) manufactured by Sartomer.

The multifunctional photocurable compound may be an oligomer formed through polymerization of the above-described (meth)acrylate compound and a compound having another functional group. Examples of such oligomers include epoxy (meth)acrylate oligomer, aliphatic urethane (meth)acrylate oligomer, aromatic urethane (meth)acrylate oligomer, and polyester (meth)acrylate oligomer.

The cationically polymerizable compound can be, for example, an epoxy compound, a vinyl ether compound, or an oxetane compound. The cationically polymerizable compound contained in the actinic radiation-curable inkjet ink may be only one cationically polymerizable compound or two or more cationically polymerizable compounds.

The epoxy compound is, for example, an aromatic epoxide, an alicyclic epoxide, or an aliphatic epoxide, and preferably an aromatic epoxide or an alicyclic epoxide for higher curability.

The aromatic epoxide can be a di- or polyglycidyl ether obtained by reacting a polyhydric phenol or an alkylene oxide adduct thereof and epichlorohydrin. Examples of the polyhydric phenol or alkylene oxide adduct thereof to be reacted include bisphenol A and an alkylene oxide adduct thereof. The alkylene oxide in the alkylene oxide adduct can be, for example, ethylene oxide or propylene oxide.

The alicyclic epoxide can be a cycloalkane oxide-containing compound obtained by epoxidizing a cycloalkane-containing compound with an oxidant such as hydrogen peroxide and peroxy acid. The cycloalkane in the cycloalkane oxide-containing compound can be cyclohexene or cyclopentene.

The aliphatic epoxide can be a di- or polyglycidyl ether obtained by reacting an aliphatic polyhydric alcohol or an alkylene oxide adduct thereof and epichlorohydrin. Examples of the aliphatic polyhydric alcohol include alkylene glycols such as ethylene glycol, propylene glycol, and 1,6-hexanediol. The alkylene oxide in the alkylene oxide adduct can be, for example, ethylene oxide or propylene oxide.

Examples of the vinyl ether compound include monovinyl ether compounds such as ethyl vinyl ether, n-butyl vinyl ether, isobutyl vinyl ether, octadecyl vinyl ether, cyclohexyl vinyl ether, hydroxybutyl vinyl ether, 2-ethylhexyl vinyl ether, cyclohexanedimethanol monovinyl ether, n-propyl vinyl ether, isopropyl vinyl ether, isopropenyl ether-o-propylene carbonate, dodecyl vinyl ether, diethylene glycol monovinyl ether, and octadecyl vinyl ether; and di- or trivinyl ether compounds such as ethylene glycol divinyl ether, diethylene glycol divinyl ether, triethylene glycol divinyl ether, propylene glycol divinyl ether, dipropylene glycol divinyl ether, butanediol divinyl ether, hexanediol divinyl ether, cyclohexanedimethanol divinyl ether, and trimethylolpropane trivinyl ether. Among these vinyl ether compounds, di- or trivinyl ether compounds are preferred in view of curability and adhesion.

The content of the photocurable compound in the inkjet ink composition is preferably 1mass% to 97mass%, and more preferably 30mass% to 95mass%.

### 1-5. Photopolymerization initiator

The photopolymerization initiator is a photo-radical initiator when the photocurable compound is a compound having a radical-polymerizable functional group, and a photoacid generator when the photocurable compound is a compound having a cationically polymerizable functional group. The photopolymerization initiator contained in the inkjet ink composition may be only one photopolymerization initiator or two or more photopolymerization initiators. The photopolymerization initiator may be a combination of both a photo-radical initiator and a photoacid generator.

Photo-radical initiators include radical initiators of cleavage type and radical initiators of hydrogen abstraction type.

Examples of radical initiators of cleavage type include acetophenone-based initiators, benzoin-based initiators, acylphosphine oxide-based initiators, benzil, and methyl phenylglyoxylate.

Examples of acetophenone-based initiators include diethoxyacetophenone, 2-hydroxy-2-methyl-1-phenylpropan-1-one, benzyl dimethyl ketal, 1-(4-isopropylphenyl)-2-hydroxy-2-methyl-propan-1-one, 4-(2-hydroxyethoxy)phenyl-(2-hydroxy-2-propyl) ketone, 1-hydroxycyclohexyl-phenyl ketone, 2-methyl-2-morpholino(4-thiomethylphenyl)propan-1-one, and 2-benzyl-2-dimethylamino-1-(4-morpholinophenyl)-butanone.

Examples of benzoin-based initiators include benzoin, benzoin methyl ether, and benzoin isopropyl ether.

Examples of acylphosphine oxide-based initiators include 2,4,6-trimethylbenzoindiphenylphosphine oxide.

Examples of radical initiators of hydrogen abstraction type include benzophenone-based initiators, thioxanthone-based initiators, aminobenzophenone-based initiators, 10-butyl-2-chloroacridone, 2-ethylanthraquinone, 9,10-phenanthrenequinone, and camphorquinone.

Examples of benzophenone-based initiators include benzophenone, methyl-4-phenylbenzophenone o-benzoylbenzoate, 4,4'-dichlorobenzophenone, hydroxybenzophenone, 4-benzoyl-4'-methyl-diphenyl sulfide, acrylated benzophenone, 3,3',4,4'-tetra(t-butylperoxycarbonyl)benzophenone, and 3,3'-dimethyl-4-methoxybenzophenone.

Examples of thioxanthone-based initiators include 2-isopropylthioxanthone, 2,4-dimethylthioxanthone, 2,4-diethylthioxanthone, and 2,4-dichlorothioxanthone.

Examples of aminobenzophenone-based initiators include Michler's ketone and 4,4'-diethylamino-benzophenone.

Examples of the photoacid generator include compounds described in The Japanese Research Association for Organic Electronics Materials (Ed.), "Organic materials for imaging", bunshin-publishing (1993), pp. 187-192.

The content of the photopolymerization initiator may be in any range that allows the inkjet ink composition to sufficiently cure, and can be, for example, 0.01mass% to 10mass% to the total mass of the inkjet ink composition.

### 1-6. Gelling agent

The inkjet ink composition according to the present invention may contain a gelling agent. The gelling agent is capable of temporarily fixing (pinning) droplets of the inkjet ink composition attached onto a recording medium through converting the droplets into gel. When the inkjet ink composition is pinned as gel, the spreading of wetting by the inkjet ink composition is prevented to lead to less occurrence of combining of adjacent dots, and as a result finer images can be formed. In addition, when the inkjet ink composition turns into gel, intrusion of oxygen from the environment into droplets of the inkjet ink composition is reduced to lead to less occurrence of curing inhibition due to oxygen, and hence finer images can be formed in a higher speed. The gelling agent contained in the inkjet ink composition may be only one gelling agent or two or more gelling agents.

The content of the gelling agent is preferably 1.0mass% to 10.0mass% to the total mass of the inkjet ink composition. By setting the content of the gelling agent to 1.0mass% or more, the pinning property of the inkjet ink composition can be enhanced. In particular, in forming an image on a substrate having water absorbability, insufficient color development due to intrusion of the inkjet ink composition into the inside of the substrate can be less likely to occur to facilitate formation of an image with a desired color gamut. By setting the content of the gelling agent to 10.0mass% or less, the gelling agent is less likely to precipitate on the surface of an image formed, and images with glossiness comparable to those provided by other inkjet ink compositions can be formed and the dischargeability of the inkjet ink composition from an inkjet head can be more enhanced. From these viewpoints, the content of the gelling agent in the inkjet ink composition is preferably 1.0mass% to 7.0mass%, more preferably 1mass% to 5.0mass%, and even more preferably 1.5mass% to 4.0mass%.

From the following viewpoints, it is preferable that the gelling agent crystalize in the inkjet ink composition at a temperature equal to or lower than the gelling temperature of the inkjet ink composition. The gelling temperature refers to a temperature at which in the course of cooling the inkjet ink composition solated or liquefied by heating, the gelling agent undergoes phase transition from sol to gel and the viscosity of the inkjet ink composition rapidly changes. Specifically, the inkjet ink composition solated or liquefied is cooled while the viscosity is measured by using a viscoelastometer (for example, MCR300, manufactured by Physica), and a temperature at which the viscosity rapidly increases can be regarded as the gelling temperature of the inkjet ink composition.

When the gelling agent crystallizes in the inkjet ink composition, a structure may be formed such that the photocurable compound is included in a three-dimensional space formed by the gelling agent crystallized as plate crystals (hereinafter, such structure is referred to as "card house structure"). When the card house structure is formed, the photocurable compound in liquid is retained in the space, which leads to less spreading of wetting by droplets of the inkjet ink composition, and as a result the pinning property of the inkjet ink composition is more enhanced. The enhanced pinning property of the inkjet ink composition results in less combining of droplets of the inkjet ink composition attached onto a recording medium, and hence finer images can be formed.

To form the card house structure, it is preferable that the photocurable compound and the gelling agent dissolved in the inkjet ink composition be compatible with each other. If the photocurable compound and the gelling agent dissolved in the inkjet ink composition are phase-separated from each other, in contrast, formation of the card house structure may be difficult.

Examples of gelling agents preferred for formation of the card house structure through crystallization include ketone wax, ester wax, petroleum wax, plant wax, animal wax, mineral wax, hydrogenated castor oil, modified wax, higher fatty acid, higher alcohol, hydroxystearic acid, fatty acid amides including N-substituted fatty acid amide and special fatty acid amide, higher amine, sucrose fatty acid ester, synthesized wax, dibenzylidene sorbitol, dimer acid, and dimer diol.

Examples of the ketone wax include dilignoceryl ketone, dibehenyl ketone, distearyl ketone, dieicosyl ketone, dipalmityl ketone, dilauryl ketone, dimyristyl ketone, myristyl palmityl ketone, and palmityl stearyl ketone.

Examples of the ester wax include behenyl behenate, icosyl icosanoate, stearyl stearate, palmityl stearate, cetyl palmitate, myristyl myristate, cetyl myristate, myricyl cerotate, stearyl stearate, oleyl palmitate, glycerin fatty acid ester, sorbitan fatty acid ester, propylene glycol fatty acid ester, ethylene glycol fatty acid ester, and polyoxyethylene fatty acid ester.

Examples of commercially available products of the ester wax include EMALEX Series manufactured by Nihon Emulsion Co., Ltd. ("EMALEX" is a registered trademark of the company), and RIKEMAL Series and POEM Series manufactured by RIKEN VITAMIN CO., LTD. ("RIKEMAL" and "POEM" are each a registered trademark of the company).

Examples of the petroleum wax include paraffin wax, microcrystalline wax, and petrolatum.

Examples of the plant wax include candelilla wax, carnauba wax, rice wax, Japan wax, Jojoba oil, Jojoba solid wax, and Jojoba ester.

Examples of the animal wax include beeswax, lanolin, and spermaceti.

Examples of the mineral wax include montan wax and hydrogenated wax.

Examples of the modified wax include montan wax derivatives, paraffin wax derivatives, microcrystalline wax derivatives, 12-hydroxystearic acid derivatives, and polyethylene wax derivatives.

Examples of the higher fatty acid include behenic acid, arachidic acid, stearic acid, palmitic acid, myristic acid, lauric acid, oleic acid, and erucic acid.

Examples of the higher alcohol include stearyl alcohol and behenyl alcohol.

Examples of the hydroxystearic acid include 12-hydroxystearic acid.

Examples of the fatty acid amide include lauric acid amide, stearic acid amide, behenic acid amide, oleic acid amide, erucic acid amide, ricinoleic acid amide, and 12-hydroxystearic acid amide.

Examples of commercially available products of the fatty acid amide include Nikka Amide Series manufactured by Nihon Kasei CO., LTD. ("Nikka Amide" is a registered trademark of the company), ITOWAX Series manufactured by Itoh Oil Chemicals Co., Ltd., and FATTYAMID Series manufactured by Kao Corporation.

Examples of the N-substituted fatty acid amide include N-stearylstearic acid amide and N-oleylpalmitic acid amide.

Examples of the special fatty acid amide include N,N'-ethylenebisstearylamide, N,N'-ethylenebis-12-hydroxystearylamide, and N,N'-xylylenebisstearylamide.

Examples of the higher amine include dodecylamine, tetradecylamine, and octadecylamine.

Examples of the sucrose fatty acid ester include sucrose stearate and sucrose palmitate.

Examples of commercially available products of the sucrose fatty acid ester include RYOTO Sugar Ester Series manufactured by Mitsubishi-kagaku Foods Corporation ("RYOTO" is a registered trademark of the company).

Examples of the synthesized wax include polyethylene wax and α-olefin-maleic anhydride copolymer wax.

Examples of commercially available products of the synthesized wax include UNILIN Series manufactured by Baker-Petrolite ("UNILIN" is a registered trademark of the company).

Examples of the dibenzylidene sorbitol include 1,3:2,4-bis-O-benzylidene-D-glucitol.

Examples of commercially available products of the dibenzylidene sorbitol include GEL ALL D manufactured by New Japan Chemical Co., Ltd. ("GEL ALL" is a registered trademark of the company).

Examples of commercially available products of the dimer diol include PRIPOR Series manufactured by Croda International Pic ("PRIPOR" is a registered trademark of the company).

Among these gelling agents, ketone wax, ester was, higher fatty acid, higher alcohol, and fatty acid amide are preferred for further enhancement of the pinning property, ketone wax represented by general formula (G1) below and ester wax represented by general formula (G2) below are more preferred for the same purpose, and ketone wax is preferred for use in combination with the above-described photocurable compound of high polarity. The ketone wax represented by general formula (G1) below or ester wax represented by general formula (G2) below contained in the inkjet ink composition may be only one ketone wax or ester wax, or two or more ketone waxes or ester waxes. The inkjet ink composition may contain either one or both of the ketone wax represented by general formula (G1) below and ester wax represented by general formula (G2) below.

### General formula (Gl): R9-CO-R10

In general formula (G1), R9 and R10 are each a linear or branched C₉₋₂₅ hydrocarbon group.

### General formula (G2): R11-COO-R12

In general formula (G2), R11 and R12 are each a linear or branched C₉₋₂₅ hydrocarbon group.

Since the number of carbon atoms of the linear or branched hydrocarbon group is nine or more in the ketone wax represented by general formula (G1) above or ester wax represented by general formula (G2) above, the crystallinity of the gelling agent is further enhanced and a more sufficient space is generated in the card house structure. Hence, the photocurable compound is likely to be sufficiently included in the space and the pinning property of ink is further enhanced. In addition, since the number of carbon atoms of the linear or branched hydrocarbon group is 25 or less, the melting point of the gelling agent is not excessively raised, and thus it is not needed to excessively heat the inkjet ink composition when the inkjet ink composition is allowed to exit. From these viewpoints, it is particularly preferable that R9 and R10 be each a linear hydrocarbon group having at least 11 and less than 23 carbon atoms.

In order to raise the gelling temperature of the inkjet ink composition to allow the inkjet ink composition to undergo gelation more rapidly after being attached, it is preferable that either R9 or R10, or either R11 or R12 be a saturated hydrocarbon group having at least 11 and less than 23 carbon atoms. For this purpose, it is more preferable that each of R9 and R10, or each of R11 and R12 be a saturated hydrocarbon group having at least 11 and less than 23 carbon atoms.

Examples of the ketone wax represented by general formula (G1) above include dilignoceryl ketone (number of carbon atoms: 23-24), dibehenyl ketone (number of carbon atoms: 21-22), distearyl ketone (number of carbon atoms: 17-18), dieicosyl ketone (number of carbon atoms: 19-20), dipalmityl ketone (number of carbon atoms: 15-16), dimyristyl ketone (number of carbon atoms: 13-14), dilauryl ketone (number of carbon atoms: 11-12), lauryl myristyl ketone (number of carbon atoms: 11-14), lauryl palmityl ketone (11-16), myristyl palmityl ketone (13-16), myristyl stearyl ketone (13-18), myristyl behenyl ketone (13-22), palmityl stearyl ketone (15-18), palmityl behenyl ketone (15-22), and stearyl behenyl ketone (17-22). Numbers of carbon atoms in each of the pairs of parentheses indicate the numbers of carbon atoms of two hydrocarbon groups formed by dividing at a carbonyl group.

Examples of commercially available products of the ketone wax represented by general formula (G1) include 18-Pentatriacontanon manufactured by Alfa Aesar, Hentriacontan-16-on manufactured by Alfa Aesar, and Kao Wax T1 manufactured by Kao Corporation.

Examples of the fatty acid or ester wax represented by general formula (G2) include behenyl behenate (number of carbon atoms: 21-22), icosyl icosanoate (number of carbon atoms: 19-20), stearyl stearate (number of carbon atoms: 17-18), palmityl stearate (number of carbon atoms: 17-16), lauryl stearate (number of carbon atoms: 17-12), cetyl palmitate (number of carbon atoms: 15-16), stearyl palmitate (number of carbon atoms: 15-18), myristyl myristate (number of carbon atoms: 13-14), cetyl myristate (number of carbon atoms: 13-16), octyldodecyl myristate (number of carbon atoms: 13-20), stearyl oleate (number of carbon atoms: 17-18), stearyl erucate (number of carbon atoms: 21-18), stearyl linoleate (number of carbon atoms: 17-18), behenyl oleate (number of carbon atoms: 18-22), and arachidyl linoleate (number of carbon atoms: 17-20). Numbers of carbon atoms in each of the pairs of parentheses indicate the numbers of carbon atoms of two hydrocarbon groups formed by dividing at an ester group.

Examples of commercially available products of the ester wax represented by general formula (G2) include UNISTER M-2222SL and Spermaceti manufactured by NOF CORPORATION ("UNISTER" is a registered trademark of the company), EXCEPARL SS and EXCEPARL MY-M manufactured by Kao Corporation ("EXCEPARL" is a registered trademark of the company), EMALEX CC-18 and EMALEX CC-10 manufactured by Nihon Emulsion Co., Ltd. ("EMALEX" is a registered trademark of the company), and AMREPS PC manufactured by KOKYU ALCOHOL KOGYO CO., LTD. ("AMREPS" is a registered trademark of the company). Most of these commercially available products are a mixture of two or more compounds, and may be separated and/or purified, as necessary, before adding to the inkjet ink composition.

### 1-7. Additional component

The inkjet ink composition may further contain any of additional components including a dispersion synergist, a photopolymerization initiator aid, and a polymerization inhibitor, as long as the advantageous effects of the present invention are achieved. The inkjet ink composition may contain only one additional component or two or more additional components.

The dispersion synergist may be used to further enhance the dispersibility of the organic pigment. The dispersion synergist is not essential in the present invention because high dispersibility is achieved by the polymer dispersant and the benzoxazole derivative. Particularly in the case of an organic pigment with low dispersibility such as a green pigment, the dispersion synergist may be used in combination. Examples of the dispersion synergist include Solsperse 5000 (manufactured by Noveon, Inc.).

Examples of the photopolymerization initiator aid include tertiary amine compounds including aromatic tertiary amine compounds. Examples of aromatic tertiary amine compounds include N,N-dimethylaniline, N,N-diethylaniline, N,N-dimethyl-p-toluidine, ethyl N,N-dimethylamino-p-benzoate, isoamylethyl N,N-dimethyl-amino-p-benzoate, N,N-dihydroxyethylaniline, triethylamine, and N,N-dimethylhexylamine.

Examples of the polymerization inhibitor include (alkyl)phenol, hydroquinone, catechol, resorcin, p-methoxyphenol, t-butylcatechol, t-butylhydroquinone, pyrogallol, 1,1-picrylhydrazyl, phenothiazine, p-benzoquinone, nitrosobenzene, 2,5-di-t-butyl-p-benzoquinone, dithiobenzoyl disulfide, picric acid, cupferron, aluminum N-nitrosophenylhydroxylamine, tri-p-nitrophenylmethyl, N-(3-oxyanilino-1,3-dimethylbutylidene)aniline oxide, dibutylcresol, cyclohexanone oxime cresol, guaiacol, o-isopropylphenol, butyraldoxime, methyl ethyl ketoxime, and cyclohexanone oxime.

### 1-8. Physical properties

To further enhance dischargeability from an inkjet head, the viscosity of the inkjet ink composition at 80°C is preferably 3 mPa·s or higher and 20 mPa·s or lower. When the inkjet ink composition contains a gelling agent, the viscosity of the inkjet ink composition at 25°C is preferably 1,000 mPa·s or higher, to allow the inkjet ink composition to sufficiently undergo gelation when the temperature decreases to normal temperature after the inkjet ink composition is attached.

When the inkjet ink composition contains a gelling agent, the gelling temperature is preferably 40°C or higher and 70°C or lower. If the gelling temperature of the inkjet ink composition is 40°C or higher, the inkjet ink composition rapidly undergoes gelation after being attached onto a recording medium, and hence the pinning property is further enhanced. If the gelling temperature of the inkjet ink composition is 70°C or lower, the inkjet ink composition is less likely to undergo gelation when the inkjet ink composition is discharged from an inkjet head where the temperature of the inkjet ink composition is typically about 80°C, and hence the inkjet ink composition can be more stably discharged.

The viscosity of the inkjet ink composition at 80°C, that at 25°C, and the gelling temperature can be determined through measurement of the variation of the dynamic viscoelasticity of the inkjet ink composition with temperature by using a rheometer. For example, these viscosities and gelling temperature can be acquired in the following manner. The inkjet ink composition is heated to 100°C, and cooled to 20°C under conditions of a shear rate of 11.7 (1/s) and a temperature-decreasing rate of 0.1°C/s while the viscosity is measured by using a stress-controlled rheometer (for example, Physica MCR301 (cone plate diameter: 75 mm, cone angle: 1.0°), manufactured by Anton Paar GmbH), and thus a curve of viscosity variation with temperature is acquired. The viscosity at 80°C and that at 25°C can be determined by reading viscosity at 80°C and 25°C in the curve of viscosity variation with temperature, respectively. The gelling temperature can be determined as a temperature at which the viscosity reaches 200 mPa·s in the curve of viscosity variation with temperature.

To further enhance dischargeability from an inkjet head, it is preferable that the average particle size of the pigment particle be 0.08 µm or larger and 0.5 µm or smaller and the maximum particle size be 0.3 µm or larger and 10 µm or smaller. The average particle size of the pigment particle in the present invention refers to a value determined by using a dynamic light scattering method with a Zatasizer Nano ZSP manufactured by Malvern Instruments Ltd. Since the inkjet ink composition containing a colorant is thick and does not allow light transmission in using the measurement apparatus, the inkjet ink composition is diluted by 200-fold before measurement. The measurement temperature is set to normal temperature (25°C).

### 2. Preparation of inkjet ink composition

The inkjet ink composition can be obtained, for example, by mixing the above-described organic pigment, polymer dispersant, benzoxazole derivative, photocurable compound, and photopolymerization initiator, and, as desired, a gelling agent and optional components, under heating. It is preferred to filter the resulting mixed solution through a specific filter. Here, to a pigment dispersion containing the organic pigment and the polymer dispersant dispersed in part of the photocurable compound, which has been prepared in advance, the rest of the components may be added and mixed together with heating. The benzoxazole derivative may be added in preparing the pigment dispersion, or added to the pigment dispersion prepared in advance. Alternatively, part of the benzoxazole derivative may be added in preparing the pigment dispersion to which the rest is to be added.

Dispersing the organic pigment, the polymer dispersant, and the photocurable compound, and, as desired, the benzoxazole derivative, can be performed, for example, by using a ball mill, a sand mill, an attritor, a roll mill, an agitator, a Henschel mixer, a colloid mill, an ultrasonic homogenizer, a pearl mill, a wet jet mill, or a paint shaker.

### 3. Image forming method

The image forming method according to the present invention can be performed in the same manner as known image forming methods, in which ink is discharged from an inkjet head to attach the ink onto a recording medium to cure the ink, except that the above-described inkjet ink composition is used for the ink.

For example, the image forming method according to the present invention includes: a first step of discharging the inkjet ink composition to attach the inkjet ink composition onto a recording medium; and a second step of irradiating the inkjet ink composition attached with actinic radiation to cure the inkjet ink composition.

### 3-1. First step

In the first step, droplets of the inkjet ink composition are discharged from a nozzle of an inkjet head to attach onto a recording medium at positions corresponding to an image to be formed.

The mode of discharging from an inkjet head may be any of on-demand mode and continuous mode. An inkjet head in on-demand mode may be any of electric-mechanical conversion systems of single cavity type, double cavity type, vender type, piston type, share mode type, shared wall type, and so forth, and electric-thermal conversion systems of thermal inkjet type, bubble jet type (bubble jet is a registered trademark of Canon Inc.), and so forth.

Enhanced discharge stability can be achieved by discharging droplets of the inkjet ink composition heated from an inkjet head. The temperature of the inkjet ink composition in being discharged is preferably 35°C or higher and 100°C or lower, and, for more enhanced discharge stability, more preferably 35°C or higher and 80°C or lower. In particular, it is preferred to allow the inkjet ink composition to exit at a temperature at which the viscosity of the inkjet ink composition is 7 mPa·s or higher and 15 mPa·s or lower, and more preferably 8 mPa·s or higher and 13 mPa·s or lower.

When the inkjet ink composition is an inkjet ink composition of sol-gel phase transition type which contains a gelling agent, it is preferred for enhancement of dischargeability of the inkjet ink composition from a recording head for discharge to set the temperature of the inkjet ink composition when the recording head for discharge is filled with the inkjet ink composition to from (gelling temperature + 10)°C to (gelling temperature + 30)°C of the inkjet ink composition. If the temperature of the inkjet ink composition in a recording head for discharge is lower than (gelling temperature + 10)°C, the inkjet ink composition undergoes gelation in the recording head for discharge or on the surface of a nozzle, and the dischargeability of the inkjet ink composition is likely to be deteriorated. If the temperature of the inkjet ink composition in a recording head for discharge is over (gelling temperature + 30)°C, the temperature of the inkjet ink composition is so excessively high that the ink components may be degraded.

The method for heating the inkjet ink composition to a specific temperature is not limited. For example, at least any of an ink feeding system including an ink tank constituting a head carriage, a feeding pipe, and a front ink tank immediate before a head, piping with a filter, a piezo head, and so forth can be heated to a specific temperature by using any of a panel heater, a ribbon heater, warm water, and so forth.

The amount of droplets of the inkjet ink composition in being discharged is preferably 2 pL to 20 pL in terms of recording speed and image quality.

### 3-2. Second step

In the second step, the inkjet ink composition attached in the first step is irradiated with an actinic energy ray to form an image of the inkjet ink composition cured. The irradiation with an actinic energy ray is preferably performed for 0.001 seconds or longer and 1.0 second or shorter after the inkjet ink composition is attached, and, for formation of finer images, more preferably performed for 0.001 seconds or longer and 0.5 seconds or shorter.

The actinic energy ray to irradiate the inkjet ink composition can be selected from, for example, electron beams, ultraviolet rays, α-rays, γ-rays, and X-rays, and irradiation with an ultraviolet ray is preferred among them. Irradiation with an ultraviolet ray can be performed, for example, by using a 395 nm water-cooled LED manufactured by Phoseon Technology. Use of an LED as a light source can prevent the occurrence of poor curing of the inkjet ink composition due to melting of the inkjet ink composition by radiant heat from a light source.

It is preferred to set an LED light source to control the peak illuminance of an ultraviolet ray with a wavelength of 370 nm or longer and 410 nm or shorter on the surface of an image to 0.5 W/cm² or higher and 10 W/cm² or lower, and more preferably set so that the peak illuminance reaches 1 W/cm² or higher and 5 W/cm² or lower. To prevent the inkjet ink composition from being irradiated with radiant heat, the amount of light to irradiate an image is preferably smaller than 350 mJ/cm².

Actinic energy ray irradiation may be performed in two stages in which the inkjet ink composition after being attached is first irradiated with an actinic energy ray for 0.001 seconds or longer and 2.0 seconds or shorter in the above-described manner for temporary curing of the inkjet ink composition, and after printing is completed the inkjet ink composition is further irradiated with an actinic energy ray for main curing. In such two-stage actinic energy ray irradiation, the shrinkage of a recording material, which occurs when the inkjet ink composition cures, is less likely to occur.

If the total ink film thickness after the inkjet ink composition attached onto a recording medium is irradiated with an actinic energy ray and cured is controlled to 2 µm or larger and 20 µm or smaller in the image forming method according to the present invention, the generation of curling and wrinkles in the recording medium, the change in texture of the recording medium, and so forth can be efficiently prevented. "Total ink film thickness" refers to the total value of film thicknesses of all inkjet ink compositions applied or printed onto a recording medium, or the average value of such film thicknesses measured at a plurality of positions expected to have a large amount of inkjet ink compositions attached.

### 3-3. Recording medium

Any recording medium on which images can be formed with the inkjet ink composition can be used in the image forming method according to the present invention, and can be, for example, a non-absorbable recording medium constituted of plastic (plastic substrate) such as polyester, polyvinyl chloride, polyethylene, polyurethane, polypropylene, acrylic resin, polycarbonate, polystyrene, acrylonitrile-butadiene-styrene copolymer, polyethylene terephthalate, and polybutadiene terephthalate; a non-absorbable inorganic recording medium of metal, glass, or the like; or a sheet of absorbable paper (such as coated paper for printing, coated paper B for printing, and cardboard).

### Examples

Hereinafter, the present invention will be specifically described with reference to Examples; however, the present invention is not limited to Examples.

### 1. Materials of inkjet ink compositions

### <Violet pigment>

PV23: Pigment Violet 23
PV32: C.I. Pigment Violet 32
PV37: Pigment Violet 37
PV39: Pigment Violet 39

### <Orange pigment>

PO36: Pigment Orange 36
PO38: Pigment Orange 38
PO43: Pigment Orange 43
P064: Pigment Orange 64
PO71: Pigment Orange 71

### <Green pigment>

PG7: Pigment Green 7
PG36: Pigment Green 36

### <Blue pigment>

PB15:6: Pigment Blue 15:6
PB25: Pigment Blue 25
PB60: Pigment Blue 60

### <Black pigment>

MOGUL-L (manufactured by Cabot Corporation)

### <Polymer dispersant>

HD1: Solsperse 32000 (manufactured by Noveon, Inc.) (comb blockcopolymer)
HD2: FLOWLEN G-700 (manufactured by KYOEISHA CHEMICAL Co., LTD.) (linear block copolymer)

### <Dispersion synergist>

Solsperse 5000 (manufactured by Noveon, Inc.)

### <Photocurable compound>

(Polymerizable compounds modified with ethylene oxide or propylene oxide)
TPGDA: tripropylene glycol diacrylate (M220, manufactured by TOAGOSEI CO., LTD.)
PEG600DA: polyethylene glycol #600 diacrylate (SR610, manufactured by Sartomer)
3PO-modified TMPTA: 3PO-modified trimethylolpropane triacrylate (M360, manufactured by Miwon Specialty Chemical Co., Ltd.)

### (Unmodified polymerizable compound)

TMPTA: trimethylolpropane triacrylate (A-TMPT, manufactured by Shin-Nakamura Chemical Co., Ltd.)
PEA: phenoxyethyl acrylate (PEA, manufactured by DKS Co., Ltd.)
DCPOEA: dicyclopentenyloxyethyl acrylate (FA512A, manufactured by Shin-Nakamura Chemical Co., Ltd.)

### <Photopolymerization initiator>

IRG819: bis(2,4,6-trimethylbenzoyl)-phenylphosphine oxide (IRGACURE 819, manufactured by BASF SE)
IRG369: 2-benzyl-2-dimethylamino-1-(4-morpholinophenyl)-butanone-1 (IRGACURE 369, manufactured by BASF SE)

### <Benzoxazole derivative>

BO1: 1,4-bis(2-benzoxazolyl)naphthalene (FLUORESCENT BRIGHTENER KCB, manufactured by Hangzhou Xcolor pigment Imp. / Exp. Co., Ltd.) (compound of formula (6))
BO2: 2,5-bis(5-tert-butyl-2-benzoxazolyl)thiophene (FLUORESCENT BRIGHTENER OB, manufactured by Hangzhou Xcolor pigment Imp. / Exp. Co., Ltd.) (compound of formula (7))
BO3: 4,4'-bis(2-benzoxazolyl)stilbene (FLUORESCENT BRIGHTENER OB-1, manufactured by Hangzhou Xcolor pigment Imp. / Exp. Co., Ltd.) (compound of formula (8))
BO4: 1,2-bis(5-methylbenzoxazol-2-yl)ethene (FLUORESCENT BRIGHTENER PF, Hangzhou Xcolor pigment Imp. / Exp. Co., Ltd.) (compound of formula (1) in which A is represented by formula (3))

### <Polymerization inhibitor>

Irg UV-10: 4,4'-[(1,10-dioxo-1,10-decanediyl)bis(oxy)]bis[2,2,6,6-tetramethyl]-1-piperidinyloxy (Irgastab UV-10, manufactured by BASF SE)

### <Surfactant>

BYK: polyether-modified polydimethylsiloxane (BYK307, manufactured by BYK Japan KK)

### <Gelling agent>

SS: stearyl stearate (WEP2, manufactured by NOF CORPORATION)
EGDS: ethylene glycol distearate (EMALEX EG-di-S, manufactured by Nihon Emulsion Co., Ltd.)

### 2. Preparation of inkjet ink compositions

### <Preparation of pigment dispersion 1-1>

The following components and 120 g of zirconia beads with a diameter of 0.5 mmφ were put in a 200 ml plastic bottle and the lid was closed, and the mixture was dispersed by using a vibration mill (Red Devil 4500L, manufactured by NISHIMURA MFG. Co., Ltd.) for 4 hours. After dispersing, the beads were separated and the dispersion was removed to obtain pigment dispersion 1-1.
PV23 (pigment): 20.0mass%
HD2 (linear polymer dispersant): 8.0mass%
PEA (photocurable compound): 72wt%

### <Preparation of pigment dispersions 1-2 to 1-4>

Each of pigment dispersions 1-2 to 1-4 was prepared in the same manner as for pigment dispersion 1-1 except that the polymer dispersant and the amount thereof and the amounts of the benzoxazole derivative and the photocurable compound were changed to the corresponding combination listed in Table 1.

### <Preparation of pigment dispersions 2-1 to 4-4>

Each of pigment dispersions 2-1 to 4-4 was prepared in the same manner as for pigment dispersion 1-1 except that the pigment and the polymer dispersant and the amounts thereof and the amounts of the benzoxazole derivative and the photocurable compound were changed to the corresponding combination listed in Table 1. The dispersion synergist was additionally used only for pigment dispersions 3-1 to 3-4.

### <Preparation of pigment dispersion 5>

Pigment dispersion 5 was prepared in the same manner as for pigment dispersion 1-1 except that the pigment and the amount thereof and the amount of the photocurable compound were changed to the corresponding combination listed in Table 1.

### [Table 1]

**Table 1: Compositions of pigment dispersions**

| | | Pigment dispersion for violet ink composition | | | | Pigment dispersion for orange ink composition | | | | Pigment dispersion for green ink composition | | | | Pigment dispersion for blue ink composition | | | | Pigment dispersion for black ink composition |
|---|---|---|---|---|---|---|---|---|---|---|---|---|---|---|---|---|---|---|
| | | 1-1 | 1-2 | 1-3 | 1-4 | 2-1 | 2-2 | 2-3 | 2-4 | 3-1 | 3-2 | 3-3 | 3-4 | 4-1 | 4-2 | 4-3 | 4-4 | 5 |
| Pigment | PV23 | 20 | 20 | 20 | 20 | | | | | | | | | | | | | |
| | PO36 | | | | | 30 | 30 | 30 | 30 | | | | | | | | | |
| | PG7 | | | | | | | | | 30 | 30 | 30 | 30 | | | | | |
| | PB15:6 | | | | | | | | | | | | | 25 | 25 | 25 | 25 | |
| | MOGUL-L | | | | | | | | | | | | | | | | | 20 |
| Dispersion synergist | | | | | | | | | | 1 | 1 | 1 | 1 | | | | | |
| Polymer dispersant | HD1 | | 8 | 8 | | | 12 | 12 | | | 8 | 8 | | | 10 | 10 | | 8 |
| | HD2 | 8 | | | | 12 | | | | 8 | | | | 10 | | | | |
| Photocurable compound | PEA | 72 | 72 | 71 | 80 | 58 | 58 | 57 | 70 | 61 | 61 | 60 | 69 | 65 | 65 | 64 | 75 | 72 |
| Benzoxazole derivative | BO2 | | | 1 | | | | 1 | | | | 1 | | | | 1 | | |

### <Preparation of pigment dispersions 1-5 to 1-16>

Pigment dispersions 1-5 to 1-8, 1-9 to 1-12, and 1-13 to 1-16 were prepared in the same manner for pigment dispersions 1-1 to 1-4 except that the violet pigment was changed to PV32 (C.I. Pigment Violet 32), PV37 (Pigment Violet 37), or PV39 (Pigment Violet 39).

### <Preparation of pigment dispersions 2-5 to 2-20>

Pigment dispersions 2-5 to 2-8, 2-9 to 2-12, 2-13 to 2-16, and 2-17 to 2-20 were prepared in the same manner for pigment dispersions 2-1 to 2-4 except that the orange pigment was changed to PO38 (Pigment Orange 38), PO43 (Pigment Orange 43), PO64 (Pigment Orange 64), or PO71 (Pigment Orange 71).

### <Preparation of pigment dispersions 3-5 to 3-12>

Pigment dispersions 3-5 to 3-8 were prepared in the same manner as for pigment dispersions 3-1 to 3-4 except that the green pigment was changed to PG36 (Pigment Green 36).

### <Preparation of pigment dispersions 4-5 to 4-12>

Pigment dispersions 4-5 to 4-8 and 4-9 to 4-12 were prepared in the same manner for pigment dispersions 4-1 to 4-4 except that the blue pigment was changed to PB25 (Pigment Blue 25) or PB60 (Pigment Blue 60).

### 3. Preparation and evaluation of inkjet ink compositions

### <Example 1>

The following components were added to pigment dispersion 1-1 obtained to reach the following ratio while pigment dispersion 1-1 was heated to 60°C, and thus a violet ink composition was prepared.
Pigment dispersion 1: 15.0mass%
TMPTA (photocurable compound): 29.55mass%
PEA (photocurable compound): 20.0mass%
DCPOEA (photocurable compound): 30.0mass%
IRG819 (photopolymerization initiator): 3.0mass%
IRG369 (photopolymerization initiator): 2.0mass%
BO4 (benzoxazole derivative): 0.3mass%
Irg UV-10: 0.1mass%
BYK: 0.05mass%

### <Examples 2 to 9 and Comparative Examples 1 and 2>

Each violet ink composition was prepared in the same manner as in Example 1 except that the pigment dispersion, the photocurable compound, and the benzoxazole derivative and the amounts thereof were changed to the corresponding combination listed in Table 2.

### <Reference Example 1>

A black ink composition was prepared in the same manner as in Example 1 except that the pigment dispersion, the photocurable compound, and the benzoxazole derivative and the amounts thereof were changed to the corresponding combination listed in Table 2.

### <Example 10>

The following components were added to pigment dispersion 1-2 to reach the following ratio while pigment dispersion 1-2 was heated to 60°C, and thus an inkjet ink composition containing a gelling agent was prepared.
Pigment dispersion 1-2: 15.0mass%
TPGDA (photocurable compound): 30.0mass%
PEG600DA (photocurable compound): 20.0mass%
3PO-modified TMPTA (photocurable compound): 21.55mass%
DCPOEA (photocurable compound): 5.0mass%
IRG819 (photopolymerization initiator): 3.0mass%
IRG369 (photopolymerization initiator): 2.0mass%
BO3 (benzoxazole derivative): 0.3mass%
Irg UV-10: 0.1mass%
BYK: 0.05mass%
SS (gelling agent): 1.50mass%
EDGS (gelling agent): 1.50mass%

### <Examples 11 to 19 and Comparative Examples 3 and 4>

Each orange ink composition was prepared in the same manner as in Example 1 except that the pigment dispersion, the photocurable compound, and the benzoxazole derivative and the amounts thereof were changed to the corresponding combination listed in Table 3.

### <Examples 21 to 29 and Comparative Examples 5 and 6>

Each green ink composition was prepared in the same manner as in Example 1 except that the pigment dispersion, the photocurable compound, and the benzoxazole derivative and the amounts thereof were changed to the corresponding combination listed in Table 4.

### <Examples 31 to 39 and Comparative Examples 7 and 8>

Each blue ink composition was prepared in the same manner as in Example 1 except that the pigment dispersion, the photocurable compound, and the benzoxazole derivative and the amounts thereof were changed to the corresponding combination listed in Table 5.

### <Examples 20, 30, and 40>

Each ink composition containing a gelling agent was prepared in the same manner as in Example 10 except that the pigment dispersion was changed as shown in Table 6.

### <Examples 41 to 49, 51 to 59, 61 to 69, 71 to 79, 81 to 89, 91 to 99, 101 to 109, 111 to 119, 121 to 129, and 131 to 139, and Comparative Examples 9 to 28>

Ink compositions were prepared in the same manner as in Examples 1 to 9 and Comparative Examples 1 and 2 by using the pigment dispersions 1-5 to 1-8, 1-9 to 1-12, and 1-13 to 1-16 with violet pigment, pigment dispersions 2-5 to 2-8, 2-9 to 2-12, 2-13 to 2-16, and 2-17 to 2-20 with orange pigment, pigment dispersions 3-5 to 3-8 with green pigment, and pigment dispersions 4-5 to 4-8 and 4-9 to 4-12 with blue pigment for pigment dispersions.

### <Examples 50, 60, 70, 80, 90, 100, 110, 120, 130, and 140>

Ink compositions containing a gelling agent were prepared in the same manner as in Example 10 by using pigment dispersions 1-6, 1-10, and 1-14 with violet pigment, pigment dispersions 2-6, 2-10, 2-14, and 2-18 with orange pigment, pigment dispersion 3-6 with green pigment, and pigment dispersions 4-6 and 4-10 with blue pigment for pigment dispersions.

The ink compositions obtained were evaluated for image unevenness and the ink compositions after storage were evaluated for dot defects in the following manner.

### (Evaluation of image unevenness)

Each of the ink compositions was introduced to an inkjet head model HA1024 manufactured by Konica Minolta, Inc. Data of gradation pattern patches formed of 10 gradation levels from 10% to 100% dot coverage rates were input, the ink composition was discharged to attach onto a recording medium under conditions of a resolution of 720 × 720 dpi and a voltage of 16 V under conditions of an ambient temperature of 25°C and an ambient humidity of 55%, and the droplets of the ink composition attached were then irradiated with an ultraviolet ray having an energy of 250 mJ/cm² by using an LED lamp to cure the droplets of the ink composition, and thus a gradation pattern formed of 10 gradation levels from 10% to 100% dot coverage rates was formed. The recording medium used was an OK topcoat (sheet for printing).

Each of the images formed was checked by visual observation for the presence or absence of image unevenness, and evaluated in accordance with the following criteria.
A: no image unevenness was generated in all of the 10-level gradation patches
B: image unevenness was observed in one of the 10-level gradation patches
C: image unevenness was observed in two or three of the 10-level gradation patches
D: image unevenness was observed in four or more of the 10-level gradation patches

Images rated as A to C are such that there would be no identifiable image unevenness in image patterns commonly output in the market.

### (Evaluation of dot defects caused by ink composition after storage)

Each of the ink compositions was stored in a dark room to give non-exposed state at 60°C for 10 days.

Each of the ink compositions after storage was introduced to an inkjet head model HA1024 manufactured by Konica Minolta, Inc. as described above. The ink composition was discharged to attach onto a recording medium under conditions of a resolution of 720 × 720 dpi and a voltage of 16 V under conditions of an ambient temperature of 25°C and an ambient humidity of 55%, and the droplets of the ink composition attached were then irradiated with an ultraviolet ray having an energy of 250 mJ/cm² by using an LED lamp to cure the droplets of the ink composition, and thus a solid image with a coverage width of 30 mm (30 mm × 100 mm) was formed. The recording medium used was an OK topcoat (sheet for printing).

The number of dot defects in each of the solid images of 30 mm width formed was counted by visual observation. Dot defects are white streaks (portions of failed printing where the color of the substrate directly appears) found by visual observation in a solid image obtained. Evaluation was performed on the basis of the number of dot defects in accordance with the following criteria.
A: nine or less dot defects
B: 10 to 14 dot defects
C: 15 to 19 dot defects
D: 20 or more dot defects

The evaluation results for Examples 1 to 40 and Comparative Examples 1 to 8 are shown together with the compositions of the ink compositions in Tables 2 to 6.

### [Table 2]

**Table 2: Violet ink compositions**

| | | Example | | | | | | | | | Comparative Example | | Reference Example |
|---|---|---|---|---|---|---|---|---|---|---|---|---|---|
| | | 1 | 2 | 3 | 4 | 5 | 6 | 7 | 8 | 9 | 1 | 2 | 1 |
| Pigment dispersion | 1-1 | 15.0 | 15.0 | 15.0 | 15.0 | | | | | | | | |
| | 1-2 | | | | | 15.0 | | 15.0 | 15.0 | | 15.0 | | |
| | 1-3 | | | | | | 15.0 | | | 15.0 | | | |
| | 1-4 | | | | | | | | | | | 15.0 | |
| | 5 | | | | | | | | | | | | 15.0 |
| Photocurable compound | TPGDA | | | | | | | | 30.0 | 30.0 | 30.0 | 30.0 | |
| | PEG600DA | | | | | | | | 20.0 | 20.0 | 20.0 | 20.0 | |
| | 3PO-modified TMPTA | | | | | | | | 24.55 | 24.85 | 24.85 | 23.85 | |
| | TMPTA | 29.55 | 29.55 | 29.55 | 29.55 | 29.55 | 29.00 | 29.84 | | | | | 29.55 |
| | PEA | 20.0 | 20.0 | 20.0 | 20.0 | 20.0 | 20.0 | 20.0 | | | | | 20.0 |
| | DCPOEA | 30.0 | 30.0 | 30.0 | 30.0 | 30.0 | 30.0 | 30.0 | 5.0 | 5.0 | 5.0 | 5.0 | 30.0 |
| Photopolymerization initiator | IRG819 | 3.0 | 3.0 | 3.0 | 3.0 | 3.0 | 3.0 | 3.0 | 3.0 | 3.0 | 3.0 | 3.0 | 3.0 |
| | IRG369 | 2.0 | 2.0 | 2.0 | 2.0 | 2.0 | 2.0 | 2.0 | 2.0 | 2.0 | 2.0 | 2.0 | 2.0 |
| Benzoxazole derivative | BO1 | | 0.30 | | | | | | 0.30 | | | 1.00 | |
| | BO2 | | | 0.3 | | 0.30 | 0.85 | 0.01 | | | | | |
| | BO3 | | | | 0.30 | | | | | | | | |
| | BO4 | 0.30 | | | | | | | | | | | |
| Polymerization inhibitor | Irg UV-10 | 0.1 | 0.1 | 0.1 | 0.1 | 0.1 | 0.1 | 0.1 | 0.1 | 0.1 | 0.1 | 0.1 | 0.1 |
| Surfactant | BYK | 0.05 | 0.05 | 0.05 | 0.05 | 0.05 | 0.05 | 0.05 | 0.05 | 0.05 | 0.05 | 0.05 | 0.05 |
| Evaluation results | Image unevenness | C | B | B | B | A | A | A | A | A | D | D | A |
| | Dot defects | C | B | B | B | B | B | B | A | A | D | D | A |

### [Table 3]

**Table 3: Orange ink compositions**

| | | Example | | | | | | | | | Comparative Example | |
|---|---|---|---|---|---|---|---|---|---|---|---|---|
| | | 11 | 12 | 13 | 14 | 15 | 16 | 17 18 | | 19 | 3 | 4 |
| Pigment dispersion | 2-1 | 15.0 | 15.0 | 15.0 | 15.0 | | | | | | | |
| | 2-2 | | | | | 15.0 | | 15.0 | 15.0 | | 15.0 | |
| | 2-3 | | | | | | 15.0 | | | 15.0 | | |
| | 2-4 | | | | | | | | | | | 15.0 |
| Photocurable compound | TPGDA | | | | | | | | 30.0 | 30.0 | 30.0 | 30.0 |
| | PEG600DA | | | | | | | | 20.0 | 20.0 | 20.0 | 20.0 |
| | 3PO-modified TMPTA | | | | | | | | 24.55 | 24.85 | 24.85 | 23.85 |
| | TMPTA | 29.55 | 29.55 | 29.55 | 29.55 | 29.55 | 29.00 | 29.84 | | | | |
| | PEA | 20.0 | 20.0 | 20.0 | 20.0 | 20.0 | 20.0 | 20.0 | | | | |
| | DCPOEA | 30.0 | 30.0 | 30.0 | 30.0 | 30.0 | 30.0 | 30.0 | 5.0 | 5.0 | 5.0 | 5.0 |
| Photo polymerization initiator | IRG819 | 3.0 | 3.0 | 3.0 | 3.0 | 3.0 | 3.0 | 3.0 | 3.0 | 3.0 | 3.0 | 3.0 |
| | IRG369 | 2.0 | 2.0 | 2.0 | 2.0 | 2.0 | 2.0 | 2.0 | 2.0 | 2.0 | 2.0 | 2.0 |
| Benzoxazole derivative | BO1 | | 0.30 | | | | | | 0.30 | | | 1.00 |
| | BO2 | | | 0.30 | | 0.30 | 0.85 | 0.01 | | | | |
| | BO3 | | | | 0.30 | | | | | | | |
| | BO4 | 0.30 | | | | | | | | | | |
| Polymerization inhibitor | Irg UV-10 | 0.1 | 0.1 | 0.1 | 0.1 | 0.1 | 0.1 | 0.1 | 0.1 | 0.1 | 0.1 | 0.1 |
| Surfactant | BYK | 0.05 | 0.05 | 0.05 | 0.05 | 0.05 | 0.05 | 0.05 | 0.05 | 0.05 | 0.05 | 0.05 |
| Evaluation results | Image unevenness | C | B | B | B | A | A | A | A | A | D | D |
| | Dot defects | C | B | B | B | B | B | B | A | A | D | D |

### [Table 4]

**Table 4: Green ink compositions**

| | | Example | | | | | | | | | Comparative Example | |
|---|---|---|---|---|---|---|---|---|---|---|---|---|
| | | 21 | 22 | 23 | 24 | 25 | 26 | 27 | 28 | 29 | 5 | 6 |
| Pigment dispersion | 3-1 | 15.0 | 15.0 | 15.0 | 15.0 | | | | | | | |
| | 3-2 | | | | | 15.0 | | 15.0 | 15.0 | | 15.0 | |
| | 3-3 | | | | | | 15.0 | | | 15.0 | | |
| | 3-4 | | | | | | | | | | | 15.0 |
| Photocurable compound | TPGDA | | | | | | | | 30.0 | 30.0 | 30.0 | 30.0 |
| | PEG600DA | | | | | | | | 20.0 | 20.0 | 20.0 | 20.0 |
| | 3PO-modified TMPTA | | | | | | | | 24.55 | 24.85 | 24.85 | 23.85 |
| | TMPTA | 29.55 | 29.55 | 29.55 | 29.55 | 29.55 | 29.00 | 29.84 | | | | |
| | PEA | 20.0 | 20.0 | 20.0 | 20.0 | 20.0 | 20.0 | 20.0 | | | | |
| | DCPOEA | 30.0 | 30.0 | 30.0 | 30.0 | 30.0 | 30.0 | 30.0 | 5.0 | 5.0 | 5.0 | 5.0 |
| Photopolymerization initiator | IRG819 | 3.0 | 3.0 | 3.0 | 3.0 | 3.0 | 3.0 | 3.0 | 3.0 | 3.0 | 3.0 | 3.0 |
| | IRG369 | 2.0 | 2.0 | 2.0 | 2.0 | 2.0 | 2.0 | 2.0 | 2.0 | 2.0 | 2.0 | 2.0 |
| Benzoxazole derivative | BO1 | | 0.30 | | | | | | 0.30 | | | 1.00 |
| | BO2 | | | 0.30 | | 0.30 | 0.85 | 0.01 | | | | |
| | BO3 | | | | 0.30 | | | | | | | |
| | BO4 | 0.30 | | | | | | | | | | |
| Polymerization inhibitor | Irg UV-10 | 0.1 | 0.1 | 0.1 | 0.1 | 0.1 | 0.1 | 0.1 | 0.1 | 0.1 | 0.1 | 0.1 |
| Surfactant | BYK | 0.05 | 0.05 | 0.05 | 0.05 | 0.05 | 0.05 | 0.05 | 0.05 | 0.05 | 0.05 | 0.05 |
| Evaluation results | Image unevenness | C | B | B | B | A | A | A | A | A | D | D |
| | Dot defects | C | B | B | B | B | B | B | A | A | D | D |

### [Table 5]

**Table 5: Blue ink compositions**

| | | Example | | | | | | | | | Comparative Example | |
|---|---|---|---|---|---|---|---|---|---|---|---|---|
| | | 31 | 32 | 33 | 34 | 35 | 36 | 37 | 38 | 39 | 7 | 8 |
| Pigment dispersion | 4-1 | 15.0 | 15.0 | 15.0 | 15.0 | | | | | | | |
| | 4-2 | | | | | 15.0 | | 15.0 | 15.0 | | 15.0 | |
| | 4-3 | | | | | | 15.0 | | | 15.0 | | |
| | 4-4 | | | | | | | | | | | 15.0 |
| Photocurable compound | TPGDA | | | | | | | | 30.0 | 30.0 | 30.0 | 30.0 |
| | PEG600DA | | | | | | | | 20.0 | 20.0 | 20.0 | 20.0 |
| | 3PO-modified TMPTA | | | | | | | | 24.55 | 24.85 | 24.85 | 23.85 |
| | TMPTA | 29.55 | 29.55 | 29.55 | 29.55 | 29.55 | 29.00 | 29.84 | | | | |
| | PEA | 20.0 | 20.0 | 20.0 | 20.0 | 20.0 | 20.0 | 20.0 | | | | |
| | DCPOEA | 30.0 | 30.0 | 30.0 | 30.0 | 30.0 | 30.0 | 30.0 | 5.0 | 5.0 | 5.0 | 5.0 |
| Photopolymerization initiator | IRG819 | 3.0 | 3.0 | 3.0 | 3.0 | 3.0 | 3.0 | 3.0 | 3.0 | 3.0 | 3.0 | 3.0 |
| | IRG369 | 2.0 | 2.0 | 2.0 | 2.0 | 2.0 | 2.0 | 2.0 | 2.0 | 2.0 | 2.0 | 2.0 |
| Benzoxazole derivative | BO1 | | 0.30 | | | | | | 0.30 | | | 1.00 |
| | BO2 | | | 0.30 | | 0.30 | 0.85 | 0.01 | | | | |
| | BO3 | | | | 0.30 | | | | | | | |
| | BO4 | 0.30 | | | | | | | | | | |
| Polymerization inhibitor | Irg UV-10 | 0.1 | 0.1 | 0.1 | 0.1 | 0.1 | 0.1 | 0.1 | 0.1 | 0.1 | 0.1 | 0.1 |
| Surfactant | BYK | 0.05 | 0.05 | 0.05 | 0.05 | 0.05 | 0.05 | 0.05 | 0.05 | 0.05 | 0.05 | 0.05 |
| Evaluation results | Image unevenness | C | B | B | B | A | A | A | A | A | D | D |
| | Dot defects | C | B | B | B | B | B | B | A | A | D | D |

### [Table 6]

**Table 6: Ink compositions containing gelling agent**

| | | Example | | | |
|---|---|---|---|---|---|
| | | 10 | 20 | 30 | 40 |
| Pigment dispersion | 1-2 | 15.0 | | | |
| | 2-2 | | 15.0 | | |
| | 3-2 | | | 15.0 | |
| | 4-2 | | | | 15.0 |
| Photocurable compound | TPGDA | 30.0 | 30.0 | 30.0 | 30.0 |
| | PEG600DA | 20.0 | 20.0 | 20.0 | 20.0 |
| | 3PO-modified TMPTA | 21.55 | 21.55 | 21.55 | 21.55 |
| | DCPOEA | 5.0 | 5.0 | 5.0 | 5.0 |
| Photopolymerization initiator | IRG819 | 3.0 | 3.0 | 3.0 | 3.0 |
| | IRG369 | 2.0 | 2.0 | 2.0 | 2.0 |
| Benzoxazole derivative | BO1 | | | | |
| | BO2 | | | | |
| | BO3 | 0.30 | 0.30 | 0.30 | 0.30 |
| | BO4 | | | | |
| Polymerization inhibitor | Irg UV-10 | 0.1 | 0.1 | 0.1 | 0.1 |
| Surfactant | BYK | 0.05 | 0.05 | 0.05 | 0.05 |
| Gelling agent | SS | 1.50 | 1.50 | 1.50 | 1.50 |
| | EDGS | 1.50 | 1.50 | 1.50 | 1.50 |
| Evaluation results | Image unevenness | A | A | A | A |
| | Dot defects | A | A | A | A |

As is clear from the results for Reference Example 1 in Table 2, a homogeneous ink composition was obtained by using a pigment having high dispersibility such as a black pigment, even without any benzoxazole derivative, and formation of an image using the ink composition was also satisfactory. For the ink composition in Comparative Example 1, for which an organic pigment having low dispersibility was used merely with a polymer dispersant, however, image unevenness was observed in four or more patches, and in addition the number of dot defects in an image formed by using the ink composition after storage was 20 or more. The ink composition in Comparative Example 2, which contained neither a polymer dispersant nor a benzoxazole derivative, underwent pigment aggregation, and evaluation based on formation of an image failed.

For the ink compositions in Examples 1 to 9, for which a benzoxazole derivative was used in addition to a polymer dispersant, improvement was found with respect to both image unevenness and dot defects, in spite of using a pigment having low dispersibility. In particular, for each of the ink compositions in Examples 2 to 4, for which the compounds of formulas (6) to (8) were used as a benzoxazole derivative, image unevenness was generated only in one patch, and the number of dot defects was as small as 10 to 14. Further, for each of the ink compositions in Examples 5 to 7, for which a comb block copolymer was used as a polymer dispersant, dot defects were found, though image unevenness was not generated. For the ink compositions in Examples 8 and 9, for which an EO-modified or PO-modified (meth)acrylate compound was used as a photocurable compound, image unevenness was not generated and the number of dot defects was nine or less.

For the ink composition in Example 8, for which a benzoxazole derivative was added not in production of the pigment dispersion but in production of the ink composition, and the ink composition in Example 9, for which a benzoxazole derivative was added in production of the pigment dispersion, no significant difference was found between the images formed, and the ink compositions obtained were both regarded as those being capable of forming satisfactory images.

As is clear from the results in Table 6, such excellent effect by using a polymer dispersant and a benzoxazole derivative in combination was also found for the ink composition containing a gelling agent in Example 10.

Results similar to those for Examples 1 to 10 and Comparative Examples 1 and 2 above, in each of which a violet pigment was used, were also observed in Examples 11 to 20 and Comparative Examples 3 and 4 (Table 3 and Table 6), in each of which an orange pigment was used, Examples 21 to 30 and Comparative Examples 5 and 6 (Table 4 and Table 6), in each of which a green pigment was used, and Examples 31 to 40 and Comparative Examples 7 and 8 (Table 5 and Table 6), in each of which a blue pigment was used.

Also for the ink compositions in Examples 41 to 49 and Comparative Examples 9 and 10, Examples 51 to 59 and Comparative Examples 11 and 12, and Examples 61 to 69 and Comparative Examples 13 and 14, in each of which another violet pigment was used for a pigment dispersion, evaluation results similar to those for the corresponding Examples or Comparative Examples shown in Table 2 above were obtained.

Also for each of the ink compositions in Examples 71 to 79 and Comparative Examples 15 and 16, Examples 81 to 89 and Comparative Examples 17 and 18, Examples 91 to 99 and Comparative Examples 19 and 20, and Examples 101 to 109 and Comparative Examples 21 and 22, in each of which another orange pigment was used for a pigment dispersion, evaluation results similar to those for the corresponding Examples or Comparative Examples shown in Table 3 above were obtained.

Also for each of the ink compositions in Examples 111 to 119 and Comparative Examples 23 and 24, in each of which another green pigment was used for a pigment dispersion, evaluation results similar to those for the corresponding Examples or Comparative Examples shown in Table 4 above were obtained.

Also for each of the ink compositions in Examples 121 to 129 and Comparative Examples 25 and 26, and Examples 131 to 139 and Comparative Examples 27 and 28, in each of which another blue pigments was used for a pigment dispersion, evaluation results similar to those for the corresponding Examples or Comparative Examples shown in Table 5 above were obtained.

Also for each of the ink compositions containing a gelling agent in Examples 50, 60, 70, 80, 90, 100, 110, 120, 130 and 140, evaluation results similar to those for the corresponding Examples using a pigment of the same color shown in Table 6 above were obtained.

The present application claims priority to Japanese Patent Application No. 2017-003314 filed on January 12,2017.

### Industrial Applicability

The present invention can provide an inkjet ink composition containing a violet, orange, green, or blue organic pigment with the dispersion stability of the organic pigment further enhanced, and an image forming method using such an inkjet ink composition.

## Claims

1. An inkjet ink composition, comprising: an organic pigment, a polymer dispersant, a benzoxazole derivative, a photocurable compound, and a photopolymerization initiator, wherein
the organic pigment is: at least one violet pigment selected from the group consisting of C.I. Pigment Violet 23, C.I. Pigment Violet 32, C.I. Pigment Violet 37, and C.I. Pigment Violet 39; at least one orange pigment selected from the group consisting of C.I. Pigment Orange 36, C.I. Pigment Orange 38, C.I. Pigment Orange 43, C.I. Pigment Orange 64, and C.I. Pigment Orange 71; at least one green pigment selected from the group consisting of C.I. Pigment Green 7 and C.I. Pigment Green 36; or at least one blue pigment selected from the group consisting of C.I. Pigment Blue 15:6, C.I. Pigment Blue 25, and C.I. Pigment Blue 60, and
the benzoxazole derivative is a compound represented by general formula (1): 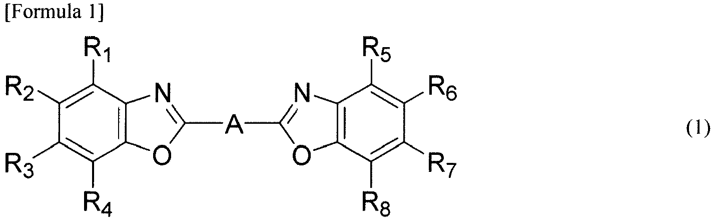 wherein
R₁ to R₈ are each independently a hydrogen atom or an alkyl group and R₁ to R₈ optionally form a ring, and
A is a linking group represented by any one of formulas (2) to (5): 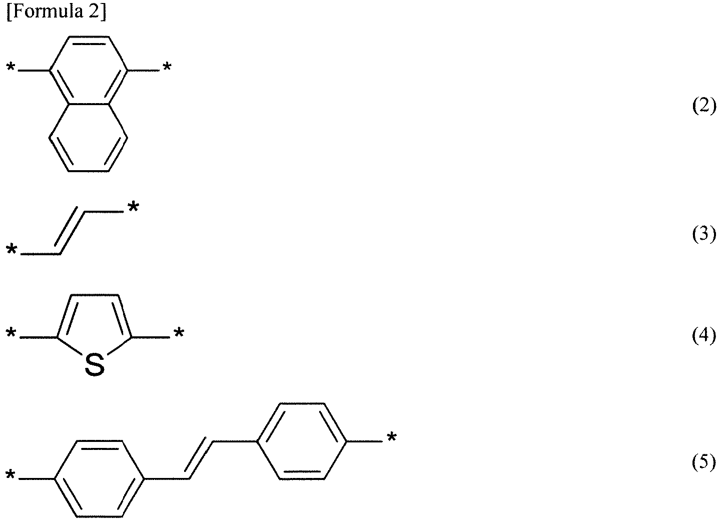 wherein ^{∗} in formulas (2) to (5) represents a linking position of A in each formula.

2. The inkjet ink composition according to claim 1, wherein the benzoxazole derivative is 1,4-bis(2-benzoxazolyl)naphthalene, 2,5-bis(5-tert-butyl-2-benzoxazolyl)thiophene, or 4,4'-bis(2-benzoxazolyl)-stilbene.

3. The inkjet ink composition according to claim 1 or 2, wherein the polymer dispersant comprises a comb block copolymer.

4. The inkjet ink composition according to any one of claims 1 to 3, wherein the photocurable compound comprises at least one member selected from the group consisting of an ethylene oxide-modified polymerizable compound and a propylene oxide-modified polymerizable compound.

5. The inkjet ink composition according to any one of claims 1 to 4, further comprising a gelling agent.

6. An image forming method, comprising:
discharging the inkjet ink composition according to any one of claims 1 to 5 from a nozzle of an inkjet recording head to attach the inkjet ink composition onto a substrate; and
irradiating the inkjet ink composition attached onto the substrate with actinic radiation to cure the inkjet ink composition.

## Patentansprüche

1. Tintenstrahltintenzusammensetzung, umfassend: ein organisches Pigment, ein polymeres Dispergiermittel, ein Benzoxazolderivat, eine photohärtbare Verbindung und einen Photopolymerisationsinitiator, wobei
es sich bei dem organischen Pigment um: zumindest ein violettes Pigment ausgewählt aus der Gruppe bestehend aus C.I. Pigment Violet 23, C.I. Pigment Violet 32, C.I. Pigment Violet 37 und C.I. Pigment Violet 39; zumindest ein oranges Pigment ausgewählt aus der Gruppe bestehend aus C.I. Pigment Orange 36, C.I. Pigment Orange 38, C.I. Pigment Orange 43, C.I. Pigment Orange 64 und C.I. Pigment Orange 71; zumindest ein grünes Pigment ausgewählt aus der Gruppe bestehend aus C.I. Pigment Green 7 und C.I. Pigment Green 36; oder zumindest ein blaues Pigment ausgewählt aus der Gruppe bestehend aus C.I. Pigment Blue 15:6, C.I. Pigment Blue 25 und C.I. Pigment Blue 60 handelt, und
es sich bei dem Benzoxazolderivat um eine durch die allgemeine Formel (1) dargestellte Verbindung handelt: 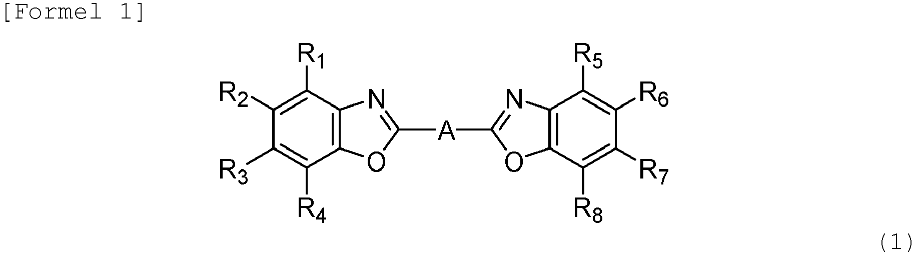
wobei
R₁ bis R₈ jeweils unabhängig für ein Wasserstoffatom oder eine Alkylgruppe stehen und R₁ bis R₈ gegebenenfalls einen Ring ausbilden, und
A für eine durch eine der Formeln (2) bis (5) dargestellte Linkergruppe steht: 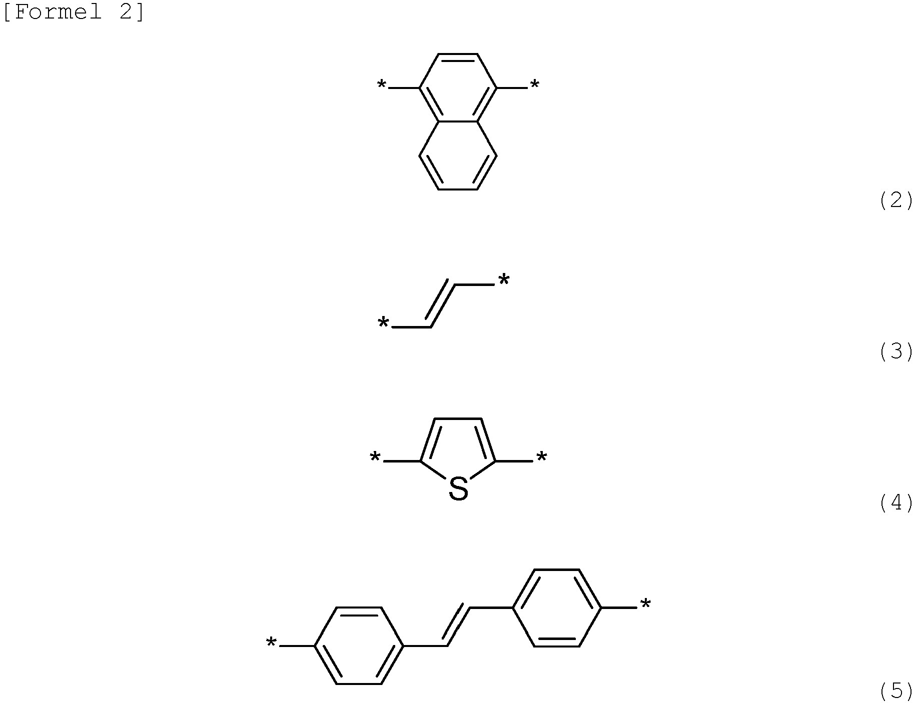
wobei * in den Formeln (2) bis (5) für eine Bindungsstelle von A in einer jeden Formel steht.

2. Tintenstrahltintenzusammensetzung gemäß Anspruch 1, wobei es sich bei dem Benzoxazolderivat um 1,4-Bis(2-benzoxazolyl)naphthalin, 2,5-Bis(5-tert-butyl-2-benzoxazolyl)thiophen oder 4,4'-Bis(2-benzoxazolyl)stilben handelt.

3. Tintenstrahltintenzusammensetzung gemäß Anspruch 1 oder 2, wobei das polymere Dispergiermittel ein Kamm-BlockCopolymer umfasst.

4. Tintenstrahltintenzusammensetzung gemäß einem der Ansprüche 1 bis 3, wobei die photohärtbare Verbindung zumindest ein Element ausgewählt aus der Gruppe bestehend aus einer mit Ethylenoxid modifizierten polymerisierbaren Verbindung und einer mit Propylenoxid modifizierten polymerisierbaren Verbindung umfasst.

5. Tintenstrahltintenzusammensetzung gemäß einem der Ansprüche 1 bis 4, weiterhin umfassend ein Geliermittel.

6. Bilderzeugungsverfahren, umfassend:
Ausstoßen der Tintenstrahltintenzusammensetzung gemäß einem der Ansprüche 1 bis 5 aus einer Düse eines Tintenstrahlaufzeichnungskopfes, um die Tintenstrahltintenzusammensetzung auf einem Substrat anzubringen; und
Bestrahlen der auf dem Substrat angebrachten Tintenstrahltintenzusammensetzung mit aktinischer Strahlung, um die Tintenstrahltintenzusammensetzung zu härten.

## Revendications

1. Composition d'encre pour jet d'encre, comprenant : un pigment organique, un dispersant polymère, un dérivé de benzoxazole, un composé photodurcissable, et un initiateur de photopolymérisation, dans laquelle
le pigment organique est : au moins un pigment violet sélectionné dans le groupe constitué par un pigment violet C. I. 23, un pigment violet C. I. 32, un pigment violet C. I. 37, et un pigment violet C. I. 39 ; au moins un pigment orange sélectionné dans le groupe constitué par un pigment orange C. I. 36, un pigment orange C. I. 38, un pigment orange C. I. 43, un pigment orange C. I. 64, un pigment orange C. I. 71 ; au moins un pigment vert sélectionné dans le groupe constitué par un pigment vert C. I. 7, un pigment vert C. I. 36 ; ou au moins un pigment bleu sélectionné dans le groupe constitué par un pigment bleu C. I. 15:6, un pigment bleu C. I. 25, et un pigment bleu C. I. 60, et
le dérivé de benzoxazole est un composé représenté par la formule générale (1) : 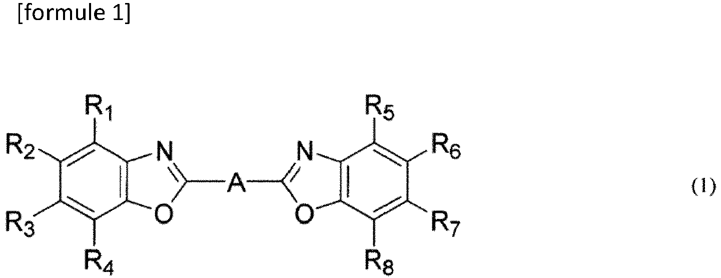
dans laquelle
R₁ à R₈ sont chacun indépendamment un atome d'hydrogène ou un groupe alkyle et R₁ à R₈ forment facultativement un cycle, et
A est un groupe de liaison représenté par l'une quelconque des formules (2) à (5) : 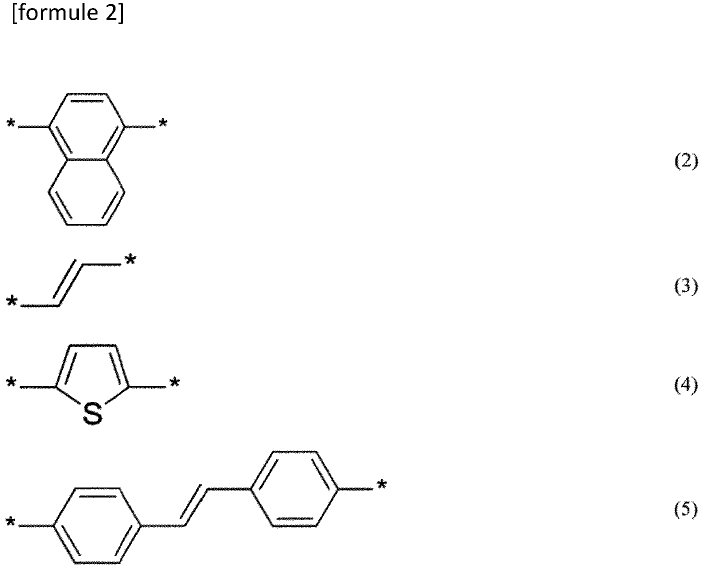
dans laquelle ^{∗} dans les formules (2) à (5) représente une position de liaison de A dans chaque formule.

2. Composition d'encre pour jet d'encre selon la revendication 1, dans laquelle le dérivé de benzoxazole est un 1,4-bis(2-benzoxazolyl)naphtalène, un 2,5-bis(5-tert-butyl-2-benzoxazolyl)thiophène, ou un 4,4'-bis(2-benzoxazolyl)-stilbène.

3. Composition d'encre pour jet d'encre selon la revendication 1 ou 2, dans laquelle le dispersant polymère comprend un copolymère séquencé en peigne.

4. Composition d'encre pour jet d'encre selon l'une quelconque des revendications 1 à 3, dans laquelle le composé photodurcissable comprend au moins un élément sélectionné dans le groupe constitué par un composé polymérisable modifié par un oxyde d'éthylène et un composé polymérisable modifié par un oxyde de propylène.

5. Composition d'encre pour jet d'encre selon l'une quelconque des revendications 1 à 4, comprenant en outre un agent gélifiant.

6. Procédé de formation d'image, comprenant :
la décharge de la composition d'encre pour jet d'encre selon l'une quelconque des revendications 1 à 5 d'une buse d'une tête d'enregistrement à jet d'encre pour fixer la composition d'encre pour jet d'encre sur un substrat ; et
l'irradiation de la composition d'encre pour jet d'encre fixée sur le substrat avec un rayonnement actinique pour durcir la composition d'entre pour jet d'encre.
